# EUROPÄISCHE PATENTSCHRIFT

(11) **EP 2 932 543 B1**
(45) Veröffentlichungstag und Bekanntmachung des Hinweises auf die Patenterteilung: **05.02.2020**
(21) Anmeldenummer: 13802666.1
(22) Anmeldetag: 11.12.2013
(51) Int. Cl.: H01M 4/04, H01M 4/13, H01M 4/139, H01M 4/66, H01G 11/30, C25B 11/02, C23C 24/06, H01G 11/24, H01M 4/02

(54) **MATERIALVERBUND, VERFAHREN ZU DESSEN HERSTELLUNG, DARAUS HERGESTELLTES SYSTEM UND ANWENDUNG DESSELBEN**
COMPOSITE MATERIAL, METHOD FOR THE PRODUCTION THEREOF, SYSTEM PRODUCED THEREFROM AND APPLICATION OF SAME
MATÉRIAU COMPOSITE, PROCÉDÉ DE FABRICATION DUDIT MATÉRIAU COMPOSITE, SYSTÈME FABRIQUÉ AVEC LEDIT MATÉRIAU ET APPLICATION DUDIT SYSTÈME

(30) Priorität: 12.12.2012 DE 102012112186
(43) Veröffentlichungstag der Anmeldung: 21.10.2015
(73) Patentinhaber: VARTA Microbattery GmbH, 73479 Ellwangen (DE)
(72) Erfinder: BRANDT, Birgit, 96515 Sonneberg (DE)
(74) Vertreter: Patentanwaltskanzlei Cartagena
(86) Internationale Anmeldenummer: PCT/EP2013/076264
(87) Internationale Veröffentlichungsnummer: WO 2014/090892

(56) Entgegenhaltungen:
- EP-A1- 0 975 034
- WO-A2-2007/116244
- DE-A1- 3 906 082
- DE-A1- 19 509 749
- US-A1- 2002 080 558
- US-A1- 2009 130 564
- US-A1- 2012 052 383
- US-B1- 6 808 845

## Beschreibung

Die Erfindung bezieht sich auf einen Materialverbund, der Beschichtungsmaterial enthaltende Partikel sowie ein zu beschichtendes Basismaterial aufweist. Die Partikel können in einen Binder eingearbeitet sein.

In einer ersten Ausführungsform betrifft die Erfindung einen Materialverbund für elektrochemische Systeme, der z. B. aus Stromableiter und einer Partikel enthaltenden Elektrode bestehen kann, ein Verfahren zu dessen Herstellung sowie dessen Anwendung in elektrochemischen Systemen und anderen Beschichtungssystemen. Gegenstand dieser Ausführungsform sind weiterhin elektrochemische Systeme - Batterien, Brennstoffzellen, Elektrolysezellen- und andere Systeme, welche vorgenannten Materialverbund enthalten.

In einer zweiten Ausführungsform betrifft die Erfindung einen Materialverbund, der Beschichtungsmaterial enthaltende Partikel sowie ein zu beschichtendes Basismaterial aufweist, wobei dieses Basismaterial unter beliebigen Materialien ausgewählt sein kann wie Metallen, Glas, Holz, Baumaterialien oder weiteren anorganischen oder organischen Werkstoffe oder Biomaterialien. Außerdem können solche Basismaterialien mit anorganischen Überzügen wie Glas sowie mit metallischen Beschichtungen versehen sein. Die Erfindung betrifft auch Verfahren zum Herstellen dieses Materialverbunds.

Die Beschichtung von Oberflächen aller Art mit partikelhaltigen Materialien findet auf sehr vielen Gebieten des täglichen Lebens Anwendung.

Von besonderer wirtschaftlicher Bedeutung sind elektrochemische Systeme und Prozesse, welche in den letzten Jahren immens an Bedeutung gewonnen haben. Insbesondere Batterien wie Lithiumionenbatterien haben gute Chancen zur Anwendung im mobilen Bereich, z. B. um die Energie einer Tankfüllung ganz oder teilweise zu speichern oder zur Stromversorgung in Kraftfahrzeugen. Darüber hinaus eignen sich solche Systeme auch für stationäre Energieanwendungen, z. B. zur Zwischenspeicherung überschüssiger regenerativer Energie, z.B. Wind- und Solarenergie, oder zur Notstromversorgung. Außerdem kommt eine Anwendung zur Stromversorgung in mobilen Geräten wie Laptops in Betracht. Einer Anwendung darüber hinaus, z. B. in Brennstoffzellen, Elektrolyseprozessen oder elektrochemischen Prozessen, sind keine Grenzen gesetzt.

Die Elektroden, d. h. Anoden und Kathoden, für derartige Systeme und Prozesse sind gemäß dem Stand der Technik oftmals porös (wie beispielsweise in der US 2012/052383 A1 offenbart) und enthalten folgende Komponenten und Substanzen, siehe z. B. Streng, Birgit: Wasserstoffelektroden in technischen Elektrolyseprozessen unter Einsatz von Wolframcarbid als Elektrokatalysator, Dissertation, Technische Universität Dresden, 1988.
(a) "Elektrochemisch aktives Material", nachfolgend "Aktivmaterial" genannt, an dessen Oberfläche sich elektrochemisch aktive Zentren befinden, an welchen die elektrochemische Reaktion abläuft. Das Aktivmaterial befindet sich zu Beginn der Elektrodenherstellung im partikelförmigen, pulverförmigen Zustand. Eine typische Korngröße kann bei 2 µm liegen. Denkbar sind auch andere Korngrößen kleiner oder größer als 2 µm, z. B. 10 µm. Denkbare elektrochemisch aktive Materialien können z. B. sein: Lithiumverbindungen, z. B. Lithiumeisenphosphat, Lithiumtitanat, Lithiumniobtat, Platin und Platinverbindungen, Blei, Beioxid, Bleisulfat, Bleiverbindungen, Nickel, Nickeloxid, Nickelverbidnungen, Cadmium, Cadmiumoxid, Cadmiumverbindungen, Silber, Silberoxid, Silberverbindungen, organische Verbindungen, die auch polymer sein können.
(b) Ein kohlenstoffhaltiges Material wie "Ruß" und/oder "Graphit" und/oder "Graphen" und/oder Kohlenstoffnanoröhren dient der Aufnahme des elektrochemisch aktiven Materials und der Verbesserung der elektronischen Leitfähigkeit des endgültigen Elektrodenmaterials. Ruß und/oder Graphit befinden sich zumindest zu Beginn der Elektrodenherstellung im partikelförmigen, pulverförmigen Zustand. Eine typische Korngröße bezüglich der Ruß-Komponente kann bei ≤ 100 nm liegen. Graphit kann in einer Korngröße von 10 bis 25 µm zur Anwendung kommen. Die Korngrößen für Ruß und Graphit können jedoch auch außerhalb der vorgenannten Korngrößen liegen.
(c) Der "Binder", der z. B. aus Tetrafluorpolyethylen oder Polyvinylidenfluorid, Polyvinylidenfluorid-hexafluoropropylen (PVDF-HEP) oder Carboxymethylzellulose oder einem Alkalisalz der Carboxymethylzellulose, z. B. Natriumcarboxymethylzellulose, Kaliumcarboxyzellulose oder Lithiumcarboxyzellulose (DE 10 2010 008 782) bestehen kann, sowie ein dafür geeignetes flüssiges Medium, welches den Binder in einen flüssigen oder gelartigen Zustand überführt, bewirken eine mechanische Stabilisierung des gesamten Elektrodenmaterials bestehend aus dem kohlenstoffhaltigen Material wie Ruß und/oder Graphit und Aktivmaterial. Der Binder hat somit eine klebende und mechanisch stabilisierende Wirkung zwischen den einzelnen Partikeln.
(d) Die Komponenten a) und/oder b) sowie c) können zu einer "Elektrodenmischung" vermischt werden.
(e) Der in der Regel flächenförmige "Stromableiter", der auch als Aufnahmematerial und zur Stabilisierung des mechanischen Zusammenhalts für die Elektrodenmischung dient, kann z. B. aus Aluminiumfolie sowie Kupferfolie bei Lithiumionenbatterien bestehen. Denkbar sind auch Stromableiter aus Metallblech oder -gitter oder faserartige Materialien (DE 40 19 092). Stromableiter aus Streckmetall wurden u. a. in WO 2004/053200 und DE 102 57 186 beschrieben. Weiterhin können auch Stromableiter bestehend aus oder enthaltend Kohlenstoff, Kohlenstofffasermaterial, Glaskohlenstoff, Graphen, aus graphenhaltigen Materialien, z. B. Graphen-haltige Kunststoffe, oder kohlenstoffbeschichteten Metallfolien, wobei das Metall z. B. Aluminium sein kann, verwendet werden, z. B. WO 2011/141 486. Bei Bleiackumulatoren kommen gemäß dem Stand der Technik in der Regel Bleigitter oder Gitter bestehend aus Blei-Antimonlegierungen zur Anwendung (siehe Handbuch für verschlossene Gel-Blei-Batterien, http://www.solarlink.de/PDF-Files/Exide/GelHandbuchTeil1.pdf). Streckmetall ist ein gitterförmiger Werkstoff mit Öffnungen in der Oberfläche und ist auch unter dem Begriff Streckgitter bekannt.

Eine gezielte Behandlung und/oder Strukturierung der Oberfläche vor Beschichtungen insbesondere unter Berücksichtigung der mathematischen, geometrischen und mechanischen Wirkmechanismen zwischen Oberfläche und Partikeln der Beschichtung ist weder bei Stromableitern für elektrochemische Systeme noch bei sonstigen Beschichtungssystemen bekannt.

Durch Zusammenfügen der festen, losen Bestandteile, enthaltend z.B. Kristalle, Moleküle, Atome oder Agglomerationen derselben, nachfolgend "Partikel" genannt, welche die Komponenten a), b), c) und/oder d) enthalten oder aus diesen bestehen können, kann eine "Partikelelektrode" gebildet und auf den "Stromableiter" e) aufgebracht werden. Dadurch entsteht ein Materialverbund bestehend aus Stromableiter und Partikelelektrode, nachfolgend auch "Materialverbund" genannt. Das Aktivmaterial a) muss bei elektrochemischen Systemen zwingend vorhanden sein, da an deren Oberfläche die elektrochemischen Reaktionen ablaufen. Die Verwendung eines Materials (Haftvermittler), welches den Zusammenhalt zwischen Stromableiter und Partikelelektrode verbessert, wird u. a. in DE 100 30 571 und WO 2005 091396 erwähnt.

Die genaue Zusammensetzung und insbesondere die Art des elektrochemisch aktiven Materials der Elektroden variiert je nach Batterietype, System, Prozess und Elektrodenart (Anode oder Kathode).

Die so hergestellten Elektroden - Anode und Kathode- werden anschließend zusammen mit dem Elektrolyten - ggf. unter Verwendung eines Separators zur Aufnahme des Elektrolyten und zur Verwendung als Abstandshalter zwischen positiver und negativer Elektrode - zu Zellen assembliert. Die Zellen können aus mehreren solchen Anoden-Elektrolyt-Kathoden-Einheiten aufgebaut sein.

Die Elektrodenentladereaktionen sind nachfolgend am Beispiel einer dem Fachmann bekannten Lithiumionenbatterie aufgeführt:

### Negative Elektrode:

Die negative Elektrode wird gemäß der nachfolgenden Reaktionsgleichung entladen:
y Li (interkaliert in Graphit*) → y Li⁺ + y e⁻ + Graphit
*) als LiCz, wobei z einen Wert bis 6 erreichen kann, siehe DE 100 30 571.

Der Graphit wird beim Entladen ganz oder teilweise reduziert.

### Positive Elektrode:

Der Entladeprozess an der positiven Elektrode kann wie folgt formuliert werden:
Li_{1-y}Mn₂O₄ + y Li⁺ + y e⁻ → LiMn₂O₄

Die während der elektrochemischen Reaktion bei Entladung abgegebenen Elektronen erzwingen einen Stromfluss und können somit zur Energieversorgung eines externen Aggregates, z. B. Laptop, PKW, stationäre Energieversorgung genutzt werden.

Redox- und Gesamtgleichung (Entladen):
Li_{1-y}Mn₂O₄ + y Li (interkaliert in Graphit) → LiMn₂O₄ + Graphit

Beim Laden verlaufen die vorgenannten Reaktionen in jeweils umgekehrte Richtung.

Lithiummanganat und Lithium (interkaliert z. B. in Graphit) fungieren dabei jeweils als Aktivmaterial (siehe Ziffer a) oben).

Der nachfolgend verwendete Ausdruck "und/oder" umfasst beliebige und sämtliche Kombinationen eines oder mehrerer aufgeführter Elemente.

In der Praxis besteht ein großer Bedarf an Verfahren zur Herstellung reproduzierbarer elektrochemischer Zellen. Denn häufig werden Reproduktionsfehler beobachtet, die z. B. darin bestehen können, dass aufgrund der komplexen Materialzusammensetzung solcher elektrochemischer Zellen lokale elektrische Übergangswiderstände auftreten. Weitere Ursachen sind Überspannungen bzw. unkontrollierte, chemische und/oder elektrochemische Reaktionen, z. B. von Wasserspuren mit dem Stromableiter und/oder dem Aktivmaterial, insbesondere Korrosionsreaktionen.

Eine wichtige Aufgabe bei der Herstellung der fertigen, Aktivmaterial enthaltenden Elektroden für solche Systeme besteht darin, dass die o. g. Komponenten a), b) und c) bzw. d) so mit dem Stromableiter e) so zu verbinden, dass eine sehr gute mechanische Haftung und gleichzeitig eine elektrochemische Funktion des Materialverbundes, bestehend aus Stromableiter und Partikelelektrode, bzw. der daraus resultierenden elektrochemischen Zelle gewährleistet ist.

In der Praxis wird insbesondere für Lithiumionenbatterien häufig Metallfolie als Stromableiter verwendet. Metallfolie ist außerdem in der Regel preisgünstiger als Streckmetall. Ein großes Problem insbesondere bei Verwendung von Metallfolien stellt dabei das Abblättern und Ablösen der Partikel der Partikelelektrode bzw. des Aktivmaterials von der Oberfläche des Stromableiters dar, was auch eine Erhöhung des elektrischen Übergangswiderstandes zwischen Stromableiter und elektrochemisch aktivem Material zur Folge hat, s. z. B. DE 10 2011 004 932, S. 2, [0006]. Weitere Folgewirkungen sind z. B. lokale Erwärmung, welche bis zum Durchbrennen der Batterie führen kann, verringerte Ladekapazität, Energieverluste. Die Zielstellung weiterer Entwicklungen besteht daher darin, einen innig haftenden Materialverbund aus Partikelelektrode und Stromableiter und ein dafür geeignetes, möglichst preisgünstiges Verfahren bereitzustellen.

EP 0599 603 beschreibt eine Elektrode zur Anwendung in alkalischen, elektrochemischen Zellen, enthaltend ein Substrat und eine äußere Schicht eines elektrochemisch aktiven Materials, wobei das Substrat eine glatte Oberfläche besitzt, welche so verändert wird, so dass eine unregelmäßige Oberfläche entsteht, einerseits mittels einer Zwischenschicht, andererseits mittels Aufrauhen oder Sandstrahlen oder elektrochemischen Ätzen. In EP 0599 60 wird jedoch nicht beschrieben, welche genauen geometrischen Abmessungen und Formen Basismaterial- und Partikeloberfläche haben müssen, damit eine gute mechanische Haftung der Partikel untereinander sowie zwischen Partikeln und Basismaterial erzeugt wird. Insbesondere beschreibt EP 0599 60 nicht, dass die Partikeln - aufgrund der angepassten geometrischen Formen und Abmessungen der Partikeln untereinander und zwischen Partikeln und Basismaterial- durch Kraft- und/oder Energieeinwirkung so fest haftend in das Basismaterial eingedrungen oder die Partikeln untereinander so fest aneinander haften, dass diese Haftung zumindest teilweise auf mechanischen Kräften zwischen Partikeln untereinander sowie zwischen Partikeln und Basismaterial beruht.

Die Problematik der mangelnden Haftung von partikelhaltigen Beschichtungen auf Oberflächen besteht darüber hinaus in vielen Bereichen der Beschichtungstechnik, z. B. der Lackierung von Automobilbauteilen. Die Partikel können in diesem Fall z.B. anorganische oder organische Farbstoffe sein.

Die gestellte Aufgabe wird durch die vorliegenden Ansprüche 1-8 offenbart.

Erfindungsgemäß wird diese Aufgabe - am Beispiel Stromableiter - Partikelelektrode wie in elektrochemischen Zellen enthaltend - dadurch gelöst, dass einerseits die Struktur und Oberflächengeometrie des Stromableiters, auf welche die Partikelelektrode mittels eines beliebigen Verfahrens, z. B. Rakeln, Pressen, Streichen, Sprühen, Kalandrieren aufgebracht wird, gezielt vorbereitet und verändert wird, dass die Haftung der Elektrodenpartikeln auf der Oberfläche des Stromableiters so weit wie möglich verbessert und dadurch Übergangswiderstände weitestgehend minimiert werden. Dies kann im einfachsten Fall z. B. durch mechanisches Anrauen mittels Sandpapier geeigneter Körnung oder durch punktgenaue Laserbehandlung erfolgen. Im Idealfall stimmen die Oberfläche des Stromableiters und der Beschichtungspartikel vor, während und/oder nach der Beschichtung so gut überein oder sind so weit angenähert, dass die Berührungsfläche zwischen Stromableiter und Partikeln ein Maximum erreicht. In jedem Fall muss es die Oberfläche des Stromableiters zulassen, dass sich die Partikel der Partikelelektrode hinsichtlich ihrer Form und Abmessungen an die Oberfläche des Stromableiters anpassen können.

Andererseits kann zusätzlich die Oberflächengeometrie der Partikeln der Partikelelektrode an die Oberflächenstruktur des Stromableiters angepasst werden. Eine Veränderung der Partikelgeometrie ist z. B. durch mechanisches Mahlen, Sieben und/oder gezielte Steuerung der bei der Herstellung der Partikel, z. B. durch Wahl der geeigneten chemischen Fällungsbedingungen möglich.

Das Eindringen der Partikel in die Vertiefungen der Oberfläche des Stromableiters kann gemäß einer besonderen Ausführungsform dieser Erfindung derart bewirkt werden, dass nach dem Beschichtungsschritt die Partikeln durch Kraft- und/oder Energieeinwirkung in die Vertiefungen ganz oder teilweise eindringen, wobei die Partikel bevorzugt härter sind als das Basismaterial bzw. der Stromableiter. Dies kann z. B. durch Pressen und oder Kalandrieren erfolgen. Beim Kalandrieren wird ein Liniendruck von bevorzugt 0,01 bis 1500 N/mm, weiter bevorzugt 0,01 bis 700 N/mm, noch mehr bevorzugt 200 bis 500 N/mm eingestellt. Der Pressdruck beträgt bevorzugt 0 bis 100 MPa, noch mehr bevorzugt 10 bis 32 MPa. Die Wirkzeit beim Pressen oder Kalandrieren beträgt bevorzugt 0,01 bis 10,0 Minuten, bevorzugt 0,5 bis 3 Minuten.

Die o. g. Wirkung der verbesserten Haftung wird erzielt, indem die Durchmesser der überwiegend vorkommenden Partikeln kleiner gewählt werden als die Durchmesser der überwiegend vorkommenden Vertiefungen an der Oberfläche des Stromableiters, so dass ein oder mehrere Partikel, im Idealfall der überwiegende Teil der Partikel, z. B. 90 % der Menge der der Partikel, in die am häufigsten vorkommenden Vertiefungen auf der Oberfläche des Stromableiters geometrisch so hineinpassen, dass eine möglichst große Berührungsfläche zwischen Stromableiter und Partikeln entsteht. Vertiefungen an der Oberfläche des Stromableiters oder des Basismaterials verstehen sich im Sinne dieser Erfindung als Abweichungen von einer glatten, ebenen Oberfläche des Basismaterials, welche lokal an den Vertiefungen zu einer verringerten Dicke des Basismaterials führen. Durch die geometrische Anpassung von Partikeln und Basismaterial entstehen eine im Wesentlichen kraftschlüssige oder formschlüssige Verbindung zwischen Stromableiter und Partikeln der Partikelelektrode sowie ein daraus resultierender Materialverbund. Dabei haften die Partikeln der Partikelelektrode erfindungsgemäß auf der Oberfläche des Stromableiters im Wesentlichen aufgrund von mechanischen Kräften, z. B. Adhäsionskräften, Klemmkräften, Haftkräften - vergleichbar mit der makroskopischen, rein mechanischen Verklemmung zweier Bauteile, z. B. eines Nagels in einer Vertiefung oder einer mechanischen Klemmverbindung. Somit werden wissenschaftliche Erkenntnisse aus der makroskopischen, technischen Mechanik in den Mikro- und Nanobereich übertragen. Dadurch wird die Wirkung einer deutlich verbesserten Haftung der Partikeln auf dem Basismaterial erzielt. Die Entfernung der Partikel von der Oberfläche des Stromableiters ist - wegen der vorgenannten, wirkenden Kräfte - erschwert bzw. nur durch Einwirkung mechanischer, thermischer, elektrischer Kräfte oder entsprechender Energie und/oder durch Einwirkung einer beliebigen, anderen chemischen, physikalischen und/oder chemisch-physikalischen Kraft und/oder Energie möglich. Die Partikel der Partikelelektrode können zumindest direkt an der Grenzfläche Stromableiter/Partikel bzw. an der ersten Lage der Partikel auf der Stromableiteroberfläche - aufgrund der vorbeschriebenen geometrischen Anpassung der Oberflächen von Stromableiter und Partikeln - somit erfindungsgemäß nicht von alleine oder nicht allein durch die Erdanziehungskraft von der Oberfläche des Stromableiters entfernt werden. Außerdem ist diese verbesserte Haftung zwischen Partikeln und Stromableiter von Vorteil, wenn die resultierenden Elektroden und Zellen zu biegen oder aufzuwickeln sind, um anstelle von Flachbatterien zylindrische Batterien herzustellen.

Die Strukturierung des Stromableiters hat jedoch auch Grenzen. So dürfen erfindungsgemäß aus der Oberfläche des Stromableiters herausragende Gebilde wie Ecken und Kanten nicht so hoch sein oder nicht so weit in die Elektrode hineinragen, dass beim späteren Zusammenbauen der Zellen der Stromableiter einer Elektrode den Separator oder den Stromableiter der entgegengesetzt geladenen Elektrode berührt. In diesem Fall würde Kurzschlussgefahr bestehen. Der Stromableiter muss daher erfindungsgemäß mit Aktivmaterial oder mit den Partikeln der Partikelelektrode so dick und so dick bedeckt sein bzw. der Separator muss so weit angepasst sein, dass jegliche Kurzschlussgefahr ausgeschlossen ist.

Neu gegenüber dem Stand der Technik ist, dass die Oberfläche des Stromableiters und der Partikel gezielt so strukturiert werden, dass die Nanostruktur des Basismaterials und die Geometrie der Partikeln der Partikelelektrode und der Oberfläche des Stromableiters optimal aneinander angepasst sind, so dass der Durchmesser der Partikeln zumindest so viel kleiner gewählt wird als der Durchmesser der Vertiefungen an der Oberfläche des Stromableiters, so dass sich dadurch Partikel und Vertiefungen an der Oberfläche des Stromableiters mechanisch fest und einander berührend miteinander verbinden und verkrallen.

Bevorzugt werden die Oberfläche des Stromableiters und der Partikeln im Nanobereich, d. h. im Bereich sehr kleiner Dimensionen < 1 mm aneinander angepasst. Ideal beträgt der Durchmesser der Vertiefungen und der Partikeln <= 100 bis 500 µm, bevorzugt <= 20 bis 50 µm, so dass die Berührungsfläche zwischen Stromableiter und Partikeln gegenüber dem Stand der Technik deutlich erhöht wird.

Die so entstehende Berührungsfläche zwischen Stromableiter und Partikeln ist daher wesentlich größer als die über die Flächenabmessungen eines Stromableiters berechnete Fläche. Durch die größere Berührungsfläche wird gleichzeitig eine höhere, wirkende Kraft, z. B. Adhäsionskraft zwischen Stromableiter und Partikelelektrode bewirkt. Die mechanische Stabilität eines solchen Materialverbundes ist deutlich größer im Vergleich zum Stand der Technik, z. B. glatter Stromableiter und nicht an den Stromableiter geometrisch angepasste Partikelgrößen und -formen.

Durch die fest verkrallte, auf mechanischen Prinzipien beruhende Verbindung zwischen Stromableiter und Partikelelektrode wird bewirkt, dass auch elektrische Übergangswiderstände zwischen dem Stromableiter e) und den übrigen Komponenten a), b) und c) bzw. d) und die daraus resultierende, unerwünschte Erwärmung reduziert wird. Somit kann der elektrische Strom weitgehend ungehindert zwischen den elektrochemisch aktiven Zentren, an welchen lokal die elektrochemische Reaktion abläuft und welche sich auf dem Aktivmaterial an der Elektrodenoberfläche befinden, und dem Stromableiter fließen. Etwaige Übergangswiderstände behindern den elektronischen Stromfluss, führen zu lokalen, unerwünschten Erwärmungen und somit zu Energieverlusten. Je weniger der elektrische Strom durch Übergangswiderstände gehindert wird, desto besser ist die Funktion und Sicherheit des Gesamtsystems bzw. des Gesamtprozesses.

Ein weiterer Vorteil der Erfindung ist, dass - bei ausreichender mechanischer Verzahnung - die Partikeln so gut in den Vertiefungen der Oberfläche des Stromableiters mechanisch haften, so dass an der Grenzfläche Stromableiter/Elektrodenmaterial kein Binder erforderlich ist. Da der Binder in der Regel keine oder nur eine geringe elektronische Leitfähigkeit besitzt, beeinträchtigt der Binder die elektronische Leitfähigkeit der gesamten Partikelelektrode. Eine teilweise oder vollständige Einsparung von Binder hat somit neben dem Vorteil der Materialeinsparung auch eine vorteilhafte Wirkung auf die verbesserte elektronische Leitfähigkeit des Materialverbundes aus Stromableiter und Partikelelektrode. Dadurch werden wiederum lokale Erwärmungen infolge von Übergangswiderständen reduziert.

Insbesondere Metallfolie aus Aluminium ist einerseits preisgünstig. Andererseits kann Metallfolie in einem kontinuierlichen Beschichtungsverfahren beschichtet werden. Die üblicherweise glatte Oberfläche der Metalloberfläche führt allerdings zu einer geringen bzw. für den Dauerbetrieb nicht ausreichenden Haftung der Partikelelektrode auf der Metallfolie, woraus höhere Übergangswiderstände und schließlich Energieverluste resultieren. Üblicherweise entscheidet sich der Fachmann in einem solchen Fall für einen gitterförmigen Stromableiter, um die Haftung der Elektrodenpartikel aus dem gitterförmigen Stromableiter zu verbessern, siehe EP 2287945. Gitterförmige Stromableiter sind jedoch in der Regel teurer als blech- oder folienförmige Stromableiter. Ferner ist es konstruktions- und herstellungstechnisch einfacher, die Kontaktierung eines blech- oder folienförmigen Stromableiters im Vergleich zu einem gitterförmigen Stromableiter mit dem äußeren Stromkreis z. B. einer stromverbrauchenden Glühlampe vorzunehmen. Bei gitterförmigen Stromableitern muss die Kontaktierung mit dem äußeren Stromkreis durch eine zusätzliche mechanische oder stoffschlüssige elektrische Kontaktierung erfolgen. Bei blech- oder folienförmigen Stromableitern, kann bei deren Fertigung z. B. eine Fahne des betreffenden Bleches oder der betreffenden Folie zum Zwecke der elektrischen Kontaktierung in den Raum außerhalb der Zelle geführt werden, so dass Übergangswiderstände eingeschränkt oder vermieden werden und so dass Folie bzw. Blech dann jeweils aus einem Stück bestehen.

Für den Fachmann ist es somit nicht naheliegend, die Vorteile eines blech- und folienförmigen Stromableiters mit einer gezielten, insbesondere an die Partikelgröße und Form angepassten und angenäherten Oberflächenbeschaffenheit, welche durch ihre spezielle geometrische Struktur eine optimale Haftung der Elektrodenpartikel auf der Oberfläche des Stromableiters bewirkt, miteinander zu verknüpfen. Dem Stand der Technik sind auch keinerlei Hinweise zu entnehmen, wonach der Fachmann eine solche gezielte, insbesondere an der Partikelform und -größe orientierte geometrische Oberflächenstrukturierung des Stromableiters vornehmen sollte. Die besondere Wirkung der verbesserten Haftung, der Verminderung von Übergangswiderständen und lokalen Erwärmung begründet somit eine erfinderische Tätigkeit.

Für den Fachmann ist es außerdem nicht naheliegend, Merkmale aus der Mikro- und Nanotechnologie mit Prinzipien der makroskopischen technischen Mechanik zu verknüpfen und diese auf spezielle elektrochemische Aufgaben anzuwenden. D. h. es erfolgt einerseits eine Abmessungs- und Form-bezogene Anpassung der Oberflächengeometrien von mikro- oder nanoskopischen Partikeln mit der mikro- oder nanoskopischen Oberflächengeometrie des korrespondierenden Basismaterials unter Berücksichtigung möglichst geringer elektrischen und elektrochemischer Übergangswiderstände. Andererseits wird dabei das Prinzip der mechanischen Verklemmung annähernd gleich großer und annähernd gleich geformter Partikel und Vertiefungen im Basismaterial angewandt. Diese Kombination ist nicht nur neu sondern auch erfinderisch, weil die Gebiete Mikro- bzw. Nanotechnologie und Elektrochemie einerseits sowie die konventionelle technische Mechanik andererseits so weit voneinander entfernt sind und sich derart voneinander unterscheiden, dass ein Fachmann spezielle Merkmale aus vorgenannten Gebieten nicht miteinander verknüpfen würde. Der Fachmann für konventionelle technische Mechanik ist in der Regel ein Maschinenbauingenieur, währenddessen der Fachmann für Mikro- und Nanotechnologie sowie Elektrochemie, z. B. ein Elektrochemiker oder Chemiker sein kann. Die Erfindung ist somit für den Fachmann nicht naheliegend.

Gemäß einer bevorzugten Ausführungsform dieser Erfindung sollen die Partikeln dabei aufgrund ihrer Abmessungen und ihrer räumlichen, mathematischen Form exakt oder annähernd exakt in die Oberflächenstruktur, insbesondere in die Vertiefungen auf der Oberfläche des Stromableiters hineinpassen, so dass durch die Verbindung von Partikeln und Stromableiter ein festhaftender, mechanischer Verbund entsteht.

Unter "annähernd exakt" - wie vorstehend erwähnt - ist zu verstehen, dass der am häufigsten vorkommende Durchmesser der Partikel jeweils mindestens 50 % oder mindestens 30 % oder bevorzugt mindestens 20 % oder besonders bevorzugt mindestens 10% jedoch mindestens 5 % geringer ist als der am häufigsten vorkommende Durchmesser der Vertiefungen auf der Oberfläche des Stromableiters.

Vorstehend erläuterte, auf mechanischen Prinzipien beruhende Haftung zwischen Stromableiter und Partikeln der Partikelelektrode kann erfindungsgemäß durch chemische, elektrochemische und/oder andere chemische und/oder chemisch-physikalische Verfahren und Mechanismen zur Verbesserung der Haftung zwischen Stromableiter und Partikelelektrode überlagert oder unterstützt werden.

Beispielhaft soll hier die Verwendung eines oder mehrerer Haftvermittlers gemäß DE 10 2006 06407, DE 10 2004 014 383, WO 2006 013 044, WO 002005 091 396 genannt werden, der vor dem Beschichten des Stromableiters mit den Partikeln der Partikelelektrode auf den Stromableiter aufgebracht wird, um die Haftung zwischen Partikeln und Stromableiter zu verbessern. Erfindungsgemäß kann der Haftvermittler aber auch nach der Beschichtung z. B. durch Sprühen einer geeigneten Lösung des Haftvermittlers auf den mit Partikeln beschichteten Stromableiter erfolgen, auch dann, wenn die Oberflächenstrukturen von Partikeln und Stromableiter nicht aneinander angepasst sind.

Geeignete Haftvermittler können z. B. sein:
- Beispielweise ein Epoxidharz, welches einen vorab durch Routineversuche ermittelten optimalen Anteil an leitfähigen Kohlenstoff enthält. Diese Optimierung zielt auf eine ausreichende elektrische Leitfähigkeit bei gleichzeitiger ausreichender Klebewirkung ab.
- Alle weiteren im Stand der Technik genannten Binder, welche im wesentlichen organischer Natur sind wie z. B. PVDF, PTFE, PE, PP, dispergiert oder in Kombination mit deren Lösemittel.
- Der Haftvermittler kann auch ein Alkalisalz der Carboxymethylzellulose sein und kann elektrisch leitfähige Zusätze wie Kohlenstoffe oder Graphit enthalten. Erfindungsgemäß wird bevorzugt ein Lithiumsalz der Carboxymethylzellulose verwendet.
- Weiterhin erfindungsgemäß bevorzugt kann der Haftvermittler ein Pflanzenöl enthalten oder daraus bestehen, z. B. Leinöl, d. h. Öl, welches aus der Leinpflanze gewonnen wurde, oder thermisch behandeltes Leinöl oder eine Verdünnung von Leinöl, wobei Lösemittel wie Terpentin oder Ethanol anwendbar sind. Erfindungsgemäß wird durch den Zusatz von Leinöl eine starke Klebewirkung zwischen den Partikeln bewirkt. Ein somit entstehender Verbund aus Partikeln und Leinöl ist besonders elastisch. Erfindungsgemäße elektrochemische Zellen können auch völlig unabhängig von der geometrischen Oberflächenstruktur der Partikel der Partikelelektrode und der Oberfläche des Stromableiters Pflanzenöl-haltige Haftvermittler insbesondere zur Verbesserung der mechanischen Stabilität der Partikelelektrode oder der Verbindung zwischen Stromableiter und Partikelelektrode enthalten.

Der Stromableiter ist ein flächenförmiges bzw. flächenwirksames Material und kann erfindungsgemäß z. B. aus Metallfolie, -blech, gelochtem Metallblech, Streckmetall, Metallsieb oder Metallschaum bestehen.

Erfindungsgemäß kann der Stromableiter aus Metall wie Kupfer, Aluminium, Nickel, Blei, Stahl, Edelstahl, Titan, Wolfram, Zirkonium, Tantal, Zink, Palladium, Gold, Chrom, Kobalt, Vanadium, edelmetallbeschichteten Titan oder Tantal, wobei das Edelmetall z. B. Platin, Ruthenium oder eine Platin-Iridium-Legierung sein kann und/oder Kohlenstoff enthalten oder daraus bestehen. Dazu zählt auch Kohlenstofffasermaterial, Graphitfolie, Glaskohlenstoff. D. h. es können - je nach Anwendungsfall - auch beliebige Legierungen vorgenannter Metalle mit einem oder mehreren, weiteren Elementen des Periodensystems der Elemente als Stromableiter verwendet werden. Darüber hinaus kann der Stromableiter auch ein beschichtetes Material sein, welches vorgenannte Metalle in seiner Beschichtung enthält und wobei innerhalb der elektrochemischen Zelle die Beschichtung das Elektrodenmaterial berührt. Erfindungsgemäß bevorzugt wird z. B. bei Lithiumionenbatterien eine faltenfreie und/oder idealerweise zuvor noch niemals gefaltete Metallfolie, z. B. aus jeweils glattem, ebenem Aluminium und/oder Kupfer verwendet. Diese Folie wird anschließend mit den erfindungsgemäßen Vertiefungen versehen. Vertiefungen auf der Oberfläche des Stromableiters im Sinne dieser Erfindung verstehen sich nicht ausschließlich als gezielt vorab in das Stromableitermaterial eingebrachte, durchgehende Löcher und Durchbrechungen wie bei Streckmetall und Gittern. Vertiefungen gemäß dieser Erfindung sind ausschließlich Abweichungen von einer glatten, ebenen Oberfläche des Stromableiters im Bereich des mit Partikeln der Partikelelektrode beschichteten Teils des Stromableiters, welche lokal an den betreffenden, "abweichenden" Stellen zu einer verringerten Dicke des Stromableitermaterials führen. Das heißt konkret, dass erfindungsgemäß auch ein Metallgitter, gelochtes Metallblech oder Streckmetall, dessen Gitter bzw. Verstrebungen selbst eine glatte Oberfläche aufweisen, an der Gitter- bzw. Streckmetall-Oberfläche mit vorab gezielt eingebrachten Vertiefungen versehen sein kann. Die Vorgehensweise bei Verwendung und Veränderung der Oberflächenstruktur von Gitter oder Streckmetall ist erfindungsgemäß die gleiche wie vorstehend für Metallfolie oder -blech beschrieben.

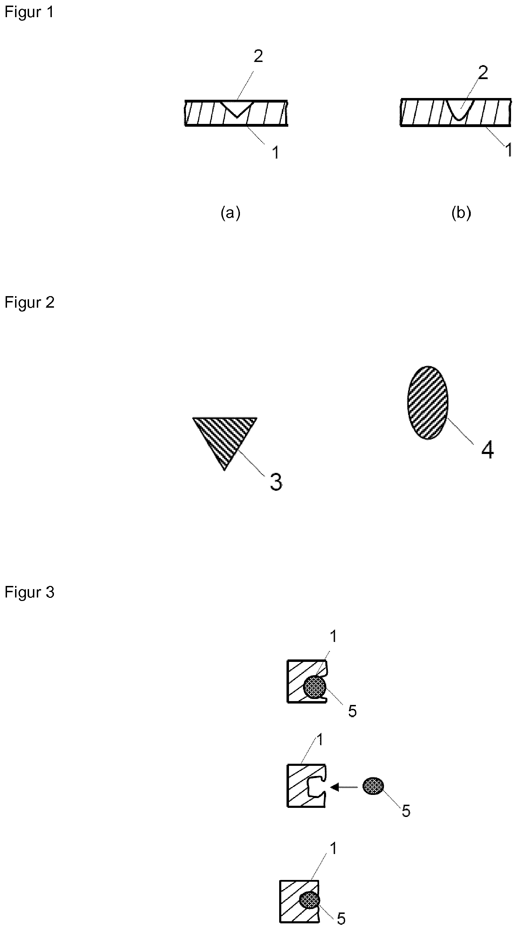

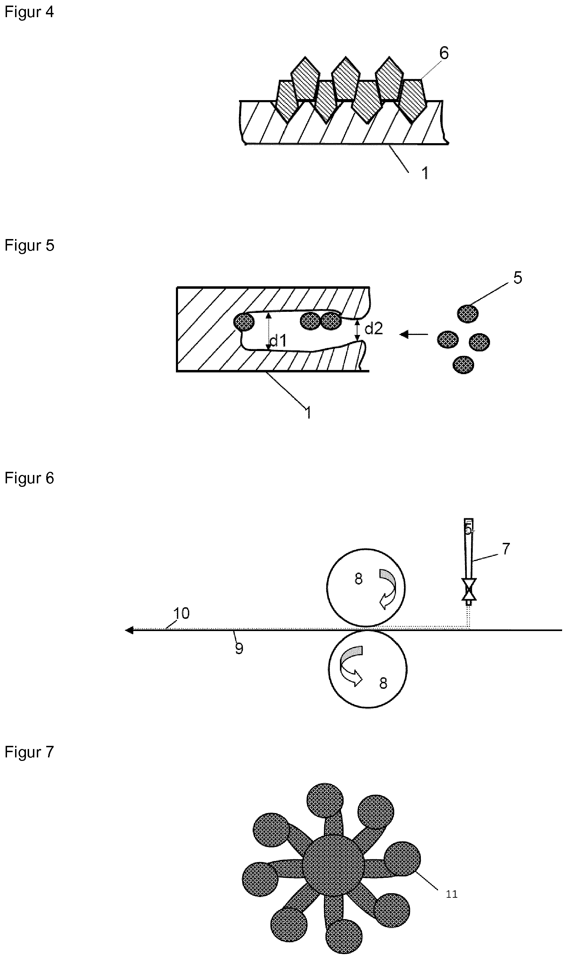

Die Vertiefungen in der Oberfläche des Stromableiters bzw. des Basismaterials können dabei folgende Formen annehmen:
- Kugelförmig oder halbkugelförmig
- Elliptisch oder halbelliptisch
- drei-, vier-, fünf-, sechs- bis n-eckig, wobei n eine beliebige natürliche Zahl sein kann und die mathematischen Abmessungen zwischen den einzelnen Ecken in der Vertiefung entweder gleich und/oder verschieden voneinander sein können und/oder durch eine beliebige mathematische Funktion miteinander verknüpft sein können. Mögliche, beispielhafte Vertiefungen in der Oberfläche des Stromableiters sind in Figur 1 dargestellt (Fig. 1a: Eckige Vertiefung; Fig. 1b: Halbelliptische Vertiefung).
- Bildung einer Klettstruktur zwischen den Partikeln der Partikelelektrode und den Vertiefungen in der Oberfläche des Stromableiters, welche dadurch gekennzeichnet ist, dass der Innendurchmesser d2 im oberflächennahen Bereich mindestens einer Vertiefung kleiner ist als der Durchmesser d1 im oberflächenfernen Bereich innerhalb der jeweiligen Pore, so dass nach Eindringen eines oder mehrerer Partikel in diese Pore die Entfernung des-/derselben Partikel/-s aus dieser Pore mechanisch erschwert oder behindert wird infolge der Klettstruktur bzw. durch den verringerten Porendurchmesser an den oberflächennahen Porenrändern. (Figur 5) Die Begriffe oberflächennah und oberflächenfern beziehen sich hierbei auf die mathematische Entfernung von der Oberfläche, gemessen z. B. in Nanometer, Mikrometer, Millimeter.

Erfindungsgemäß sind neben den räumlichen Abmessungen der Partikel und der Oberfläche des Stromableiters auch deren jeweilige, tatsächliche geometrische Formen maßgeblich dafür, dass einerseits ein mechanisch möglichst fester Verbund zwischen Partikeln der Partikelelektrode und Oberfläche des Stromableiters entsteht. Andererseits verringert sich der elektrische Übergangswiderstand, wenn die Berührungsfläche zwischen Partikeln und Oberfläche des Stromableiters zunimmt und/oder die Adhäsionskraft zwischen den Partikeln der Partikelelektrode und Oberfläche des Stromableiters zunimmt.

Die Partikel der Partikelelektrode können folgende Formen annehmen:
- Kugelförmig oder halbkugelförmig
- Elliptisch oder halbelliptisch
- drei-, vier-, fünf-, sechs- bis n-eckig, wobei n eine beliebige natürliche Zahl >= 4 sein kann und die mathematischen Abmessungen zwischen den einzelnen Ecken und Kanten auf der Oberfläche des Partikels entweder gleich und/oder verschieden voneinander sein können und/oder durch eine beliebige mathematische Funktion miteinander verknüpft sein können. Beispiele für n-eckige Partikel können Pyramiden, Prismen, Tetraeder, Kegel, Oktaeder, Dodekateder oder sternförmige Partikel sein. Mögliche, beispielhafte Partikel sind in Figur 2 dargestellt.
- Vorgenannte Formen, d. h. z. B. kugelförmige, elliptische Partikel, polyedrische Körper, oktaedrische Körper, sternförmige Gebilde, an deren Oberflächen sich jeweils fest verbunden oder fest verankert abgerundete oder Ecken aufweisende Noppen, Haken, Anker, kegelförmige Gebilde oder beliebige n-eckige Gebilde befinden können, wobei n eine beliebige natürliche Zahl >= 4 sein kann und die mathematischen Abmessungen zwischen den einzelnen Ecken und Kanten auf der Oberfläche des Partikels entweder gleich und/oder verschieden voneinander sein können und/oder durch eine beliebige mathematische Funktion miteinander verknüpft sein können. Beispielhaft zu nennen ist die Form einer Kugel oder eines Oktaeders, aus deren Oberfläche gleichmäßig oder ungleichmäßig verteilt Kegel herausragen, so dass sich eine Sternform ergibt. Grundsätzlich sind dabei alle Morphologien möglich, die auch bei Kristallen auftreten.

Erfindungsgemäß können ein oder mehrere Partikel der Partikelelektrode in jeweils eine einzige Vertiefung an der Oberfläche des Stromableiters eingebracht werden.

Gemäß einer besonderen Ausführungsform dieser Erfindung werden die geometrischen Formen der Partikel der Partikelelektrode und die Vertiefungen in der Oberfläche des Stromableiters aneinander angeglichen und angepasst. Das heißt z. B. runde Vertiefungen in der Oberfläche des Stromableiters werden mit runden Partikeln der Partikelelektrode verbunden, oktaedrische Vertiefungen in der Oberfläche des Stromableiters werden mit oktaedrischen Partikeln der Partikelelektrode verbunden, elliptische Partikeln der Partikelelektrode werden mit gleich elliptisch geformten Vertiefungen in der Oberfläche des Stromableiters verbunden etc. Die vorgenannten geometrischen Oberflächen werden durch jeweils angepasste chemische, chemisch-physikalische und/oder physikalische Verfahren erzeugt. So können z. B. eckige Vertiefungen in der Oberfläche des Stromableiters durch mechanische Behandlung mittels eckiger Sandkörner unter Einwirkung einer definierten mechanischen Kraft hergestellt werden.

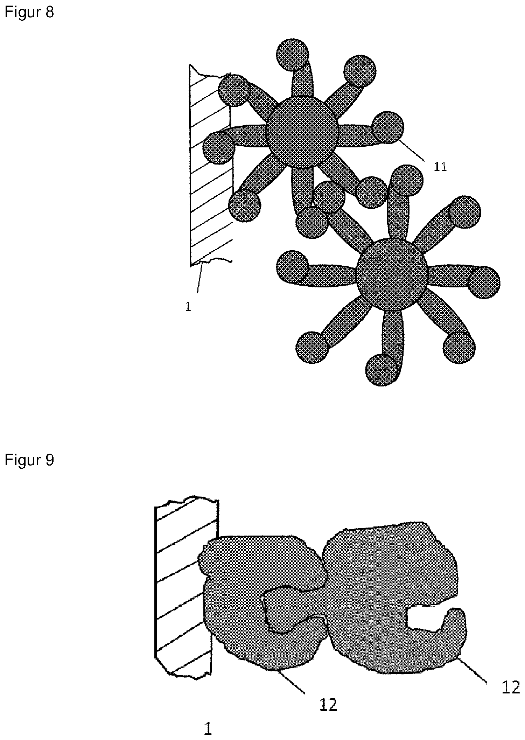

Nach einer speziellen Ausführungsform dieser Erfindung ragen aus der kugelförmigen, elliptischen oder n-eckigen Oberfläche der Partikel - gleichmäßig oder ungleichmäßig über dieser Oberfläche verteilt - spezielle Gebilde heraus, die Teil dieser Partikel sind bzw. fest mit diesen Partikeln verbunden sind. Solche Gebilde können z. B. Kegel sein, so dass sich insgesamt sternförmige Partikel ergeben, oder Noppen oder Anker, die idealerweise zahnradförmig und/oder mit Haken versehen sind. In Figur 7 ist als Partikel beispielhaft der Querschnitt einer Kugel, aus deren Oberfläche gleichmäßig oder ungleichmäßig verteilt zahnradförmige Haken, Noppen oder andere beliebige Körper herausragen können, dargestellt. Anstelle einer Kugel können die Partikeln auch beliebige Polyeder, z. B. Würfel, Tetraeder, Ikosaeder, Oktaeder, Dodekaeder enthalten, aus deren Oberfläche gleichmäßig oder ungleichmäßig verteilt zahnradförmige Haken, Noppen, Anker oder andere beliebige Körper herausragen. Die Oberfläche des Basismaterials ist gekennzeichnet durch o. g. Klettstruktur wie in Figur 5 dargestellt oder enthält zumindest Vertiefungen gemäß Figur 1, und/oder 4. Durch spezielle Noppen, Anker oder Haken, welche aus der Partikeloberfläche herausragen und welche Teile der Partikel selbst sind, können sich einerseits die Partikel mit dem Basismaterial fest verhaken, verbinden oder verkrallen, so dass die Partikeln nicht oder nur unter Anwendung zusätzlicher Kräfte aus dem Basismaterial wieder herausgelöst werden können. Darüber hinaus können sich auch die Partikel untereinander - wie beispielhaft in den Figuren 8 und 9 dargestellt - so fest miteinander verkrallen, verbinden oder verklemmen bzw. einen festen Verbund aus Partikeln bilden, so dass eine gute mechanische Haftung zwischen den Partikeln selbst erzielt wird und so dass sich die Partikeln nicht oder nur unter Anwendung zusätzlicher Kräfte voneinander lösen. Dadurch werden erfindungsgemäß einerseits die mechanische Haftung zwischen den Partikeln untereinander und im Verbund mit dem Basismaterial verbessert und andererseits die elektrischen Übergangswiderstände zwischen den Partikeln untereinander und im Verbund mit dem Basismaterial reduziert.

Weiterhin können erfindungsgemäß die Partikeln an deren Oberfläche selbst - wie in Figur 5 für das Basismaterial dargestellt- klettstrukturhaltige Vertiefungen aufweisen, so dass sich die Partikeln untereinander fest miteinander verbinden, verklemmen oder verkrallen können, s. Figur 9. Solche klettstrukturhaltigen Vertiefungen sind dadurch gekennzeichnet sind, dass der Innendurchmesser d2 im oberflächennahen Bereich des Partikels mindestens einer Vertiefung kleiner ist als der Durchmesser d1 im oberflächenfernen Bereich innerhalb der jeweiligen Pore, so dass nach Eindringen eines oder mehrerer Partikel in diese Pore die Entfernung des-/derselben Partikel/-s aus dieser Pore mechanisch erschwert oder behindert wird infolge der Klettstruktur bzw. durch den verringerten Porendurchmesser an den oberflächennahen Porenrändern. Die Begriffe oberflächennah und oberflächenfern beziehen sich hierbei auf die mathematische Entfernung von der Oberfläche, gemessen z. B. in Nanometer, Mikrometer, Millimeter.

Gemäß einer weiteren Ausführungsform sind im erfindungsgemäßen Materialverbund die geometrischen Formen und die mathematischen Abmessungen der Partikeln der Partikelelektrode und der Vertiefungen in der Oberfläche des Stromableiters derart angenähert, dass mindestens 99,99 % oder mindestens 80% oder mindestens 50 % oder mindestens 20 % oder mindestens 10 % der Oberfläche des Stromableiters von der Oberfläche der Partikeln der Partikelelektrode berührt werden. Erfindungsgemäß und idealerweise werden mindestens jeweils 10 %, bevorzugt 20 %, weiterhin bevorzugt 50 % der Oberfläche der Partikeln vollständig von der Oberfläche des Stromableiters berührt.

Materialverbünde, welche aus Partikeln und Oberfläche des Stromableiters in Abhängigkeit von deren Oberflächengeometrie entstehen, sind beispielhaft in Figur 3 dargestellt.

Gemäß einer besonderen Ausführungsform der Erfindung und unter Nutzung des vorstehend erläuterten Prinzips der Anpassung geometrischer Formen und Abmessungen der Oberflächen von Partikeln und Stromableiter ist die Oberfläche des Stromableiters ausschließlich mit Partikeln bestehend aus elektrochemisch aktiven Material versehen bzw. beschichtet. (Figur 4) Diese Beschichtung kann so dünn bzw. minimal sein, dass die Schicht des Aktivmaterials nur ein bis drei oder wenige Atomlagen umfasst.

Ein weiteres Kriterium für eine gute mechanische Haftung zwischen Partikeln der Partikelelektrode und der Oberfläche des Stromableiters und einen möglich geringen elektrischen Widerstand zwischen Partikeln der Partikelelektrode und der Oberfläche des Stromableiters ist die wirkende mechanische Kraft, z. B. Adhäsionskraft zwischen Partikeln und Oberfläche des Stromableiters. Diese Kraft ist u. a. von derjenigen Energie abhängig, welche beim Auftragen der Partikeln der Partikelelektrode auf die Oberfläche des Stromableiters angewandt wird.

Durch die vorstehend erläuterte Vorgehensweise ist es erfindungsgemäß möglich, die Zahl der Atomlagen bezüglich des Beschichtungsmaterials auf der Oberfläche des Stromableiters exakt oder annähernd genau einzustellen.

Darüber hinaus eignet sich erfindungsgemäß der vorstehend beschriebene Materialverbund auch zur Herstellung von Elektroden und zu deren Anwendung in anderen Batterien als Lithiumionenbatterien. Derartige Elektroden können in der elektrochemischen Zelle dann als positive und/oder negative Elektrode bzw. als Kathode bzw. Anode dienen. Beispiele derartiger Batterien sind Bleiakkumulatoren, Lithium-Luft-Batterien, Lithium-Schwefel-Batterien, Zink-Luft-Batterien, Nickel-Cadmium-Akkumulatoren, Zink-Kohle-Batterien, Nickel-Metallhydrid-Batterien, Alkali-Mangan-Batterien etc.. Dabei kann es sich um Primär- oder Sekundärelemente handeln. Solche Batterien können z. B. und je nach Batterietype in Laptops, elektrischen Kleingeräten, Fahrzeugen oder für die stationäre Energiespeicherung und -versorgung Anwendung finden.

Der Materialverbund gemäß der vorliegenden Erfindung eignet sich außerdem zur Herstellung von Elektroden für weitere elektrische Systemen, insbesondere von Doppelschicht-Kondensatoren.

Der erfindungsgemäße Materialverbund kann - je nach Materialzusammensetzung und -aufbau als mit dem Stromableiter verbundene positive oder negative Elektrode in weiteren elektrochemischen Zellen wie Brennstoffzellen, Elektrolysezellen, in elektrochemischen Messzellen oder in allen sonstigen elektrochemischen Zellen verwendet werden. Üblicherweise werden elektrochemische Zellen durch Zusammenfügen von negativer und positiver Elektrode sowie zwischen vorgenannte Elektroden eingebrachte Elektrolyte und - sofern im Einzelfall erforderlich - Separatoren oder Membranen, ggfs. zur Aufnahme flüssiger oder fester Elektrolyte assembliert.

Das vorgenannte Prinzip der Beschichtung eines Stromableiters, der auch als "Basismaterial" bezeichnet werden kann, mit Elektrodenmaterial für den Anwendungszweck elektrochemische Zelle lässt sich auf alle Beschichtungsprozesse und daraus resultierende Materialverbünde übertragen bzw. verallgemeinern, indem die im Beschichtungsmaterial enthaltenen Partikel bezüglich Größe und Form optimal - wie schon zuvor für den Fall Stromableiter - Partikelelektrode beschrieben - an eine strukturierte Oberfläche des Basismaterials angepasst werden und/oder indem die Oberfläche des Basismaterials so strukturiert wird, dass die Partikel des Beschichtungsmaterials in die Vertiefungen an der Oberfläche des Basismaterials eindringen und mechanisch fest an der Oberfläche des Basismaterials haften können. Die daraus resultierenden wesentlich höheren Kräfte zwischen Beschichtung und Basismaterial bewirken eine deutlich bessere Haftung der Beschichtung auf dem Basismaterial und eine geringere Neigung zum Abplatzen der Beschichtung. Beispielhafte Anwendungen solcher Beschichtungen sind Lack- und Kunststoffbeschichtungen aller Art z. B. auf Automobilteilen, Beschichtungen in der Bautechnik, in der Photovoltaik, einschließlich aller anorganischen Beschichtungen etc.

Das Beschichtungsverfahren zur Herstellung eines solchen Materialverbundes, z. B. für Kathoden oder Elektroden in Lithiumionenbatterien, kann nacheinander folgende Schritte 1-12 enthalten:
1. Ermittlung der räumlichen Abmessungen der Partikel sowie der Größenverteilung der Partikel, welche zur Beschichtung vorgesehen sind, mittels geeigneter Messtechnik. Solche Verfahren zur Ermittlung der Partikelgröße und Partikelgrößenverteilung sind im Stand der Technik bekannt ist, z. B. Laser Scanning Mikroskopie oder statische Laserstreuung, siehe z.B. unter http://www.chemie.de/whitepaper/121964/partikelgroessenbestimmung-mit-statischer-laser-streuung.html. Falls eine solche Ermittlung der Partikelgrößenverteilung nicht 100%ig genau möglich ist, dann soll eine näherungsweise Ermittlung der durchschnittlichen, am häufigsten vorkommenden Partikelgröße erfolgen. Sofern die Partikelgrößenverteilung bekannt ist, kann während des Beschichtungsverfahrens auch auf diesen Schritt 1 bzw. die Ermittlung der Partikelgrößenverteilung verzichtet werden.
   Optional, anstelle von oder ergänzend zu Schritt 1: Anpassung/Einstellung der optimalen Partikelgröße und -form, z. B. durch mechanisches Mahlen, Sichtungsverfahren, Sieben, durch Wahl der Syntheseprozesse und -parameter, insbesondere unter Berücksichtigung physikalischer und chemischer Randbedingungen wie Temperatur, Druck, chemische Zusammensetzung, unter Einfluss von magnetischen und elektrischen Feldern, z. B. während der chemischen Ausfällung der Partikel in einer Lösung, durch kontrollierte Kristallisation, welche jeweils durch Routineversuche durch den Fachmann ermittelt werden können. Beispielhaft bzw. zum Vergleich ist die Bildung komplexer, u. a. sternförmiger Schneekristalle zu erwähnen, wie z. B. erläutert unter JOHN W. BARRETT, HARALD GARCKE, ROBERT NÜRNBERG, Phys. Rev. E 86 (2012) 011604 oder in G. L. KIEL: Anorganisches Grundpraktikum kompakt: Qualitative und quantitative Analyse, WILEY-VCH, 2012, S. 93 ff. Auch eine biotechnologische Herstellung speziell geformter Kristalle, z. B. genetisch gesteuert wie in C. SOELLNER, E. BUSCH-NENTWICH, T. NICOLSON, J. BERGER AND H. SCHWARZ, Control of Crystal Size and Lattice Formation by Starmaker in Otolith Biomineralization, Science, 10 October 2003 erörtert, ist in Betracht zu ziehen. Um die jeweils optimale Form zu erzielen, kann die Bildung der Partikelform z. B. mittels Laserscanningmikroskopie oder Rasterelektronenmikroskopie kontrolliert werden. Die Partikel können auch durch Mikro- oder Nanofräsen hergestellt werden, d. h. die Partikeloberfläche wird durch mechanischen Abtrag eingestellt. Ferner können Partikel durch dreidimensionale Druckverfahren im Mikro- und Nanobereich, ggf. computergesteuert, gezielt geformt und deren Abmessungen eingestellt werden. Dadurch gelingt die maßgeschneiderte Herstellung speziell geformter Partikel, wie o. g. Zahnrad- oder Sternformen. Gemäß einer Ausführungsform der vorliegenden Erfindung werden polyedrische Partikel erzeugt, z. B. Oktaeder, welche bevorzugt an den Ecken und Kanten der Partikeln weiterwachsen, so dass z. B. sternförmige Partikel resultieren. Weitere Verfahren zur Herstellung der erfindungsgemäßen, komplexen Partikel mit definierter Struktur sind dreidimensionale Druckverfahren, u. a. 3D-Laserlithographie, siehe beispielsweise Sensormagazin 2/2013, S. 36/37, http://www.nanoscribe.de/data/2013-05-01%20SensorMagazin.pdf und Zeitschrift Mikroproduktion 3/2013 - http://www.mikroproduktion.com/index.php?id=produktmeldunq&tx_ttnews[tt_news]=2297& cHash=b8af8bb7e40585fd4151b9e72c1f1561. Die Partikelgröße und -form sollte dabei idealerweise vorab so definiert und eingestellt werden, dass sich die Partikel in den Vertiefungen des Basismaterials oder mit dem Basismaterial so fest wie möglich verkrallen, verklemmen und verbinden. Andererseits sollen Partikelform und -größe so eingestellt und bemessen werden, dass sich die Partikel ähnlich wie Zahnräder (s. Figur 7) oder über Haken, welche aus einer kugelförmigen, eliptischen oder polyedrischen Oberfläche herausragen, miteinander mechanisch verklemmen und verbinden.
   Gemäß einer Ausführungsform dieser Erfindung erfolgt die Einstellung der optimalen Partikelgröße und -form derart, dass im resultierenden Materialverbund die geometrischen Formen und die mathematischen Abmessungen der Partikeln der Partikelelektrode und der Vertiefungen in der Oberfläche des Stromableiters derart angenähert sind, dass mindestens 99,99 % oder mindestens 80% oder mindestens 50 % oder mindestens 20 % oder mindestens 10 % der Oberfläche des Stromableiters von der Oberfläche der Partikeln der Partikelelektrode berührt werden.
   In einer vorteilhaften Ausgestaltung der Erfindung sind die Partikel der Partikelelektrode derart gestaltet, dass die oben erläuterte Klettstruktur gemäß Figur 5 entsteht.
2. Strukturierung der Oberfläche des Stromableiters bzw. des Basismaterials: Der Stromableiter bzw. das Basismaterial kann z. B. eine Metallfolie oder ein Streckmetall aus Aluminium sein, der im Ausgangszustand - mit Ausnahme der Kanten - über eine glatte Oberfläche verfügt, die lediglich fertigungsbedingt Unebenheiten zufälliger Natur aufweist. Die gezielte, erfindungsgemäße Oberflächenstrukturierung erfolgt derart, dass diejenigen Partikel der Partikelelektrode bzw. des Beschichtungsmaterials, deren Größe und häufigste Verteilung gemäß Schritt 1. ermittelt und/oder gemäß Schritt 2. eingestellt wurde, mathematisch bzw. hinsichtlich der räumlichen Abmessungen so exakt wie möglich in die Vertiefungen der Oberfläche hineinpassen. Zumindest sollen die Abmessungen der am häufigsten vorkommenden Partikelgrößen des Beschichtungsmaterials kleiner sein als die Abmessungen der Vertiefungen in der Oberfläche des Stromableiters bzw. des Basismaterials. Gemäß einer besonderen Ausführungsform der Erfindung ist der häufigste Durchmesser der Partikeln jeweils mindestens 50 % oder mindestens 30 % oder bevorzugt mindestens 20 % oder besonders bevorzugt mindestens 10% oder weiterhin bevorzugt mindestens 1% oder 5 % geringer ist als der häufigste Durchmesser der Vertiefungen auf der Oberfläche des Stromableiters bzw. des Basismaterials.
   Gemäß einer weiteren Ausführungsform dieser Erfindung erfolgt die Oberflächenstrukturierung des Stromableiters bzw. des Basismaterials derart, dass im resultierenden Materialverbund die geometrischen Formen und die mathematischen Abmessungen der Partikeln der Partikelelektrode und der Vertiefungen in der Oberfläche des Stromableiters bzw. des Basismaterials derart angenähert sind, dass mindestens 99,99 % oder mindestens 80% oder mindestens 50 % oder mindestens 20 % oder mindestens 10 % der Oberfläche des Stromableiters bzw. des Basismaterials von der Oberfläche der Partikeln der Partikelelektrode bzw. des Beschichtungsmaterials berührt werden.
   In einer vorteilhaften Ausgestaltung der Erfindung sind die Vertiefungen bzw. Poren an der Oberfläche des Stromableiters bzw. des Basismaterials derart gestaltet, dass eine Klettstruktur gemäß Figur 5 entsteht.
   Als Verfahren zur gezielten Strukturierung der ganz oder teilweise zu beschichtenden Oberfläche des Stromableiters bzw. des Basismaterials kommen z. B. in Betracht:
   - Mechanisches Aufrauen bzw. Bearbeitung der Oberfläche mittels mechanischer Verfahren wie Sandstrahlen, Aufrauen mit Sandpapier oder anderen Verfahren zur mechanischen Oberflächenveränderung, wobei vorab die Korngröße des Mittels zum Strukturieren der Oberfläche gezielt so festgelegt wird, dass die zu erzielenden Vertiefungen in der Oberfläche des Stromableiters definierte, geometrische Abmessungen und/oder Formen wie zuvor erläutert annehmen.
   - Perforation oder Oberflächenstrukturierung des Basismaterials mittels Laser (http://www.lang-laser.de/index.php?id=88) oder anderer geeigneter physikalischer Strahlen, vorzugsweise hochenergetische Strahlen, mittels Ultrakurzpulslaserbehandlung (s. u. a. DE 197 44 368, Elektronikpraxis 5.12.2013, STEFAN NOLTE et al., http://www.elektronikpraxis.vogel.de/mst/articles/427235/; Physik Journal 5.12.2013-http://www.pro-physik.de/details/physiknews/5613971/Zukunftspreis fuer kurze Pulse.html, Deutscher Zukunftspreis 2013 des Bundespräsidenten; http://werkstoffzeitschrift.de/blogwerkstoffe/ultrakurzpulslaser-zur-materialbearbeitung/: DR. DAVID OFFENBERG, DR. RAMONA LANGNER, JÜRGEN KOHLHOFF, STEFAN RESCHKE, Ultrakurzpulslaser zur Materialbearbeitung, 19.11.2012, http://www.produktion.de/fertigung/ ultrakurzpulslaser-revolutionieren-die-produktion/: Beitrag vom 13.11.2013, Produktion, verlag moderne industrie GmbH, Justus-von-Liebig-Straße 1, 86899 Landsberg, http://www.elektroniknet.de/elektronikfertigung/fertigungstechnik/ artikel/103908/.
   - Elektrochemische und galvanische Verfahren zur Oberflächenbehandlung und -strukturierung, z.B. wie in www.timcal.com/scopi/group/timcal/timcal.nsf/Attachment/2D72703B853696ABC125745 00050120E/$file/Brochure Carbon Powders for Lithium Battery Systems.pdf oder in Carsten Köntje, Dissertation, Universität Ulm, 2011, http://vts.uni-ulm.de/docs/2012/7839/ vts_7839_11328.pdf beschrieben, insbesondere Anodisieren, Kathodisieren, auch unter dem Namen elektrochemisches Abtragen bekannt. Die zu strukturierende Oberfläche bzw. das Basismaterial wird z. B. nach bekannten Verfahren an eine Gleichspannungsquelle angeschlossen. Der Plus- und Minus-Pol der Gleichspannungsquelle wird jeweils mit der zu strukturierenden Oberfläche und einer geeigneten Gegenelektrode elektrisch verbunden. Bei Metallen wird in der Regel das zu strukturierende Metall mit dem Pluspol der Gleichspannungsquelle verbunden und dabei ein im Vergleich zur Standardwasserstoffelektrode ausreichend positives Potential aufgeprägt. Ausreichend positiv heißt, dass das aufgeprägte Potential so positiv bzw. betragsmäßig so hoch sein muss, um alle thermodynamischen und kinetischen Hemmungen unter den tatsächlichen Bedingungen zu überwinden, so dass eine Metallauflösung stattfinden kann. Die zu strukturierende Oberfläche und die Gegenelektrode werden in eine geeignete Elektrolytlösung, z. B. verdünnte Natriumnitratlösung getaucht.
   - Chemische Verfahren mit für das jeweilige Material geeigneten chemischen Ätzmitteln (z. B. verdünnte Natronlauge oder verdünnte Salpetersäure für Aluminiumfolie). Allerdings besteht hier die Gefahr, dass unkontrollierte, insbesondere unkontrolliert tiefe Vertiefungen im Stromableiter entstehen.
   - http://de.wikipedia.org/wiki/Lift-off-Verfahren, photolithographische Strukturierung, Carbon-Dioxide-Snow-Technik, Elektronenstrahllithographie und weitere Verfahren welche aus der Halbleiterstrukturierung oder Mikrosystemtechnik bekannt sind.
   - Bekannte Verfahren zur Herstellung von offenporigen Metallschäumen wie Heiß-pressen oder Strangpressen, pulvermetallurgische Verdichtung, Gasinjektion in die Schmelze, Lasersintern, siehe http://www.metallschaum.info/de/herstellung
   - Prägekalandrieren, insbesondere gemäß Kunststoffmagazin, August 2010, S. 41, http://www.kunststoffmagazin.de/epaper/km070810/km_070810/blaetterkatalog/blaetterkatalog/html/oberfl_aechen veredelung_praegeka.html
   - Dreidimensionale Druckverfahren, u. a. 3D-Laserlithographie, s. Sensormagazin 2/2013, S. 36/37, http://www.nanoscribe.de/data/2013-05-01%20SensorMagazin.pdf und Zeitschrift Mikroproduktion 3/2013 - http://www.mikroproduktion.com/index.php?id=produktmeldung&tx_ttnews[tt_news]=229 7&cHash=b8af8bb7e40585fd4151b9e72c1f1561.
   - Mikro- oder Nanofräsen, z. B. mechanisch oder elektrochemisch, s. u. a. Physikalische Blätter Volume 56, Issue 9, DOI: 10.1002/phbl.20000560904, Article first published online: 20 FEB 2013, WILEY-VCH Verlag GmbH & Co. KGaA, Weinheim, http://www.maschinenmarkt.vogel.de/themenkanaele/produktion/zerspanungstechnik/arti cles/148255/: Minat 2008, Elektrochemisches Fräsen hält Einzug in die Fertigung, 8.10.2008.
3. Entfetten und/oder Reinigung des Stromableiters bzw. des Basismaterials mit destilliertem Wasser und/oder Ethanol und/oder Aceton und/oder einem anderem geeignetem Lösung- und /oder Reinigungsmittel. Unter Reinigungs- und/oder Lösungsmittel im Sinne dieser Erfindung sind auch die nachfolgend genannten Mittel bzw. Agentien zu verstehen: Vakuum, Absaugen und/oder Druckluft, um Schmutzpartikel von der Oberfläche des Stromableiters bzw. des Basismaterials zu entfernen; Gase, welche auch unter Druck stehen können und welche Fremdstoffe beim Überleiten über die Oberfläche des Stromableiters bzw. des Basismaterials aufnehmen und entfernen können. Als physikalische Verfahren können sich beispielhaft Vakuum, Absaugen und/oder Druckluft verstehen.
4. Ergänzend/nach Bedarf: Behandlung mit einem oder mehreren chemischen Mittel(n) und/oder mittels chemisch-physikalischer und/oder physikalischen Verfahren zur Entfernung elektrisch wenig leitfähiger, oxidischer und/oder hydroxidischer Deckschichten (z. B. Beizen) und/oder zur gezielten Erzeugung elektrisch leitfähiger Deckschichten auf der Oberfläche des Stromableiters bzw. des Basismaterials. Diese Art der Behandlung kommt insbesondere dann zur Anwendung, wenn der herzustellende Materialverbund ein elektrisches oder elektrochemisches System ist. Etwaige Oxide/ Hydroxide auf der Oberfläche des Basismaterials führen zu Übergangswiderständen, welche den Stromfluss behindern und daher unerwünscht sind. Bevorzugt können in diesem Fall die nachfolgenden Schritte unter Sauerstoff- und Wasserausschluss erfolgen, um die Bildung neuer Oxidschichten, z. B. bei Aluminium zu vermeiden.
5. Erforderlichenfalls: Trocknung des Stromableiters bzw. des Basismaterials - je nach Anforderungen- unter Schutzgas, an der Luft oder bevorzugt im Vakuum und/oder bei erhöhter Temperatur, wobei es vorteilhaft ist, Luft bzw. Sauerstoff bzw. die Bildung elektrisch isolierender Oxidschichten an der Grenzfläche des Stromableiters zum Elektrodenmaterial zu vermeiden.
6. Ergänzend kann der Stromableiter bzw. das Basismaterial, z. B. die Aluminiumfolie, durch ein chemisch inertes/hoch korrosionsbeständiges, hoch elektrisch leitfähiges Material (Haftvermittler wie oben beschrieben) beschichtet sein, bevor die Partikeln der Partikelelektrode auf den so beschichteten Stromableiter bzw. das Basismaterial aufgebracht werden.
7. Vorbereitung der Partikel der Partikelelektrode bzw. des Beschichtungsmaterials, indem die Komponenten gemäß a) bis c) zu einer homogenen Mischung vermischt werden. Erforderlichenfalls kann die so hergestellte Mischung gemahlen werden, um z. B. die gewünschte Korngröße einzustellen. Zur Vermischung der Elektrodenbestandteile bzw. der Beschichtungsbestandteile a) bis c) können wiederum verschiedene Verfahren aus dem Stand der Technik zur Anwendung kommen. Erfindungsgemäß werden bevorzugt zuerst die festen Elektrodenbestandteile bis zur Homogenität der Mischung trocken vorgemischt, und danach zuerst mit möglichst wenig Lösungsmittel (z. B. destilliertem Wasser) versetzt und innig verrührt. Anschließend wird nach und nach destilliertes Wasser zugesetzt und wieder innig bis zur Homogenität der Mischung gerührt oder gemischt. Der Binder insbesondere Carboxymethylzellulose-haltiger Binder wird über einen Zeitraum von 1...24 Stunden in destilliertem Wasser vorgequollen und nach der Quellung nochmals bis zur Homogenität gemischt. Der gequollene Binder wird in der Regel am Ende des Mischvorganges der Mischung zugesetzt und nochmals bis zur Homogenität der Mischung gerührt oder gemischt. Der Binder kann auch ein Alkalisalz der Carboxymethylzellulose sein, erfindungsgemäß bevorzugt ein Lithiumsalz derselben. Durch die Verwendung von Lithiumcarboxymethylzellulose, z. B. im Vergleich zu Natriumcarboxymethylzellulose, wird bewirkt, dass die Lithiumionen in der Carboxymethylzellulose die ionische Leitfähigkeit übernehmen, nicht jedoch Natriumionen. Die Natriumionen haben einen erheblich größeren lonenradius als die Lithiumionen und können z. B. infolge Migration bzw. lonenwanderung im elektrischen Feld in den Elektrolyten gelangen. Dies kann unerwünschte Veränderungen des Elektrolyten zur Folge haben, z. B. Versprödung eines festen Elektrolyten, weil die Natriumionen ein größeres Volumen einnehmen. Weiterhin erfindungsgemäß bevorzugt kann der Binder ein Pflanzenöl enthalten, z. B. Leinöl, d. h. Öl, welches aus der Leinpflanze hergestellt wurde, oder thermisch behandeltes Leinöl oder eine Verdünnung von Leinöl, wobei Lösemittel wie Terpentin oder Ethanol anwendbar sind. Erfindungsgemäß wird durch den Zusatz von Pflanzen- oder Leinöl eine starke Klebewirkung zwischen den Partikeln oder zwischen Partikeln und Stromableiter bewirkt. Ein somit entstehender Verbund aus Partikeln oder aus Partikeln und Stromableiter jeweils mit Pflanzenöl ist besonders elastisch und daher besonders zur Herstellung gewickelter bzw. gebogener elektrochemischer oder elektrischer Zellen geeignet. Erfindungsgemäße, vorstehend genannte elektrochemische oder elektrische Zellen können auch völlig unabhängig von der geometrischen Oberflächenstruktur der Partikel der Partikelelektrode und der Oberfläche des Stromableiters Pflanzenöl-haltige und/oder Alkalicarboxymethylzellulose- , insbesondere Lithiumcarboxymethylzellulose-haltige Binder insbesondere zur Verbesserung der mechanischen Stabilität der Partikelelektrode oder der Verbindung zwischen Stromableiter und Partikelelektrode enthalten.
8. Gemäß einer besonderen Ausführungsform der Erfindung wird die Oberfläche des Stromableiters bzw. des Basismaterials zunächst gemäß Schritt 2 bis 7 oder mindestens einem der Schritte 2 bis 7 behandelt und anschließend mit einer Kohlenstoff enthaltenden Mischung, welche Ruß und/oder/Graphit beinhalten kann, beschichtet. Diese kohlenstoffhaltige Mischung kann zusätzlich den Binder enthalten. Dadurch bildet sich zunächst auf der Oberfläche des Stromableiters bzw. des Basismaterials eine Art Brücke, welche die elektrische Leitfähigkeit fördert. Eine solche Kohlenstoff-haltige Mischung kann auch ein Kohlenstoffdünnfilm, wie in DE 10 2012 104 489 beschrieben, sein. Danach wird die so vorbereitete Elektrode mit elektrochemisch aktivem Material oder Binder enthaltendem elektrochemisch aktivem Material beschichtet. Anschließend kann die so hergestellte Elektrode schließlich verdichtet werden, z. B. durch mechanisches Pressen oder Kalandrieren.
9. Gemäß einer weiteren Ausführungsform der Erfindung wird die Oberfläche des Stromableiters ausschließlich mit Aktivmaterial beschichtet.
10. Beschichtung der gemäß Schritt 2 strukturierten Oberfläche mit dem Beschichtungsmaterial gemäß Schritt 1. Die Beschichtung kann nach jeweils verschiedenen Verfahren, welche gemäß dem Stand der Technik bekannt sind, erfolgen. Solche Verfahren sind z.B. Rakeln, Siebdruck, mechanisches Pressen unter Druck oder Ansaugen unter Vakuum, Infiltrieren, Elektrophorese, Aufbringen, z. B. elektrostatisch oder unter Überdruck (d. h. >Atmosphärendruck) oder Unterdruck (< Atmosphärendruck)/ Aufsprühen des trockenen Pulvers, chemische Dampf-Abscheidung (CVD) physikalische Dampf-Abscheidung (PVD) bzw. Sputtern, sonstige beliebige chemische, chemisch-physikalische und/oder physikalische Verfahren. Erfindungsgemäß kann das Basismaterial oder der Stromableiter im Vergleich zum Beschichtungsmaterial eine höhere Temperatur aufweisen bzw. erwärmt sein, z. B. auf eine Temperatur von bis zu 100° C und das Beschichtungsmaterial Normaltemperatur haben. Diese Behandlung führt dazu, dass sich das Basismaterial beim Abkühlen zusammenzieht und dadurch die Partikel optimal in die Vertiefungen der Oberfläche des Stromableiters eingeklemmt werden.
11. Trocknung der beschichteten Elektroden bzw. des beschichteten Materials bei Raumtemperatur oder erhöhter Temperatur, z. B. mittels elektrischer Kontakttrocknung, Vakuumtrocknung, unter Schutzgasatmosphäre (z. B. Argon, Stickstoff), Lufttrocknung, IR-, UV- oder einer anderen flüssigkeitsentziehenden Strahlung und/oder nach einem sonstigem bekanntem Trocknungsverfahren. Die Optimierung der Trockentemperatur erfolgt einerseits hinsichtlich einer möglichst schonenden Aufheizung, um das Lösungsmittel so langsam zu verdampfen, dass der Partikelverbund innerhalb der Elektrodenmasse bzw. des Beschichtungsmaterials nicht gestört bzw. gelockert wird bzw. elektronische Übergangswiderstände vermieden werden. Andererseits muss - aus wirtschaftlichen Gründen - der Trockenprozess auch innerhalb eines möglichst geringen Zeitraumes erfolgen. Eine solche Routineoptimierung kann durch den Fachmann erfolgen und ist im Stand der Technik bezüglich anorganischer oder keramischer Mischungen bekannt. In jedem Fall müssen z. B. bei lithiumhaltigen Batterien erfindungsgemäß Wasserspuren aus dem Beschichtungsmaterial vollständig entfernt werden, um chemische und/oder elektrochemische Reaktionen dieser Wasseranteile mit dem Aktivmaterial und/oder dem Stromableiter bzw. dadurch bedingte elektrische Übergangswiderstände und Überspannungen und Korrosionsvorgänge zu vermeiden. Je nach Art der vorgehenden Beschichtung gemäß Schritt 10 kann die Trocknung auch entfallen, wenn keinerlei Lösungsmittel mehr in der Schicht enthalten ist.
12. Optional kann eine räumliche Verdichtung der gemäß Schritt 9-11 erzeugten Schicht erfolgen, z. B. durch mechanisches Pressen oder Kalandrieren bei Raumtemperatur. Die Temperatur während dieses Verdichtungsprozesses kann beliebig eingestellt werden, bevorzugt im Bereich von 0 bis 200° C, weiter bevorzugt bei Raumtemperatur. Durch diese mechanische Verdichtung wird der elektrische Übergangswiderstand zwischen dem Stromableiter und den Partikeln des Elektrodenmaterials sowie zwischen den Partikeln des Elektrodenmaterials untereinander nochmals reduziert.

Einzelne der Verfahrensschritte 1-12 bei vorgenanntem Verfahren können je nach Anforderung an die Beschichtung ganz oder teilweise weggelassen werden oder Verfahrensstufen, welche im Stand der Technik bekannt sind, an beliebiger Stelle ergänzt werden.

Alternativ und gemäß einer besonderen Ausführungsform dieser Erfindung können Schritt 1 bis 10 auch derart zusammengefasst werden, dass ein so weiches Basismaterial, welches gemäß Schritt 3 und/oder 4 vorbehandelt (Reinigung, Entfettung, bei elektrochemischen und elektrischen Systemen: Oxide entfernt) wurde, verwendet wird und die Partikel oder das Beschichtungsmaterial unter einem so hohen Druck auf das Basismaterial aufgebracht werden, dass die Partikel oder das Beschichtungsmaterial ganz oder teilweise in das Basismaterial eindringen, bedecken und im Basismaterial haften. Auf diese Weise werden - wie oben beschrieben- die Oberflächengeometrie des Basismaterials und der Partikel des Beschichtungsmaterials optimal aneinander angepasst, so dass ein fest haftender Verbund entsteht. Diese Haftung ist dann derart stark, dass sich die Partikel aus dem Basismaterial nur durch Aufwendung zusätzlicher Kräfte wieder entfernen lassen.

Als weiche Basismaterialien kommen hier z. B. in Betracht:
- möglichst reine, ggf. wärmebehandelte oder erwärmte/erhitzte Folie enthaltend Aluminium, vorzugsweise hochreines Aluminium mit einer Reinheit von > 99,00 Gew.% Aluminium (http://de.wikipedia.org/wiki/Alufolie, http://www.otterstedt.de/wiki/index.php/Metall %28Aluminium%29)
- Folie enthaltend Kupfer, vorzugsweise hochreines Kupfer mit einer Reinheit von > 99,00 Gew.% Kupfer.

Erfindungsgemäß können die Partikel des Beschichtungsmaterials über eine z. B. leicht klebrige Kalanderoberfläche aufgenommen werden und auf das Basismaterial z. B. auf mechanischem Weg, z. B. durch Aufrollen, übertragen werden. Die dafür erforderliche Klebrigkeit ist vergleichbar mit der einer Haushaltsgummifusselrolle (z.B. http://de.wikipedia.org/wiki/Fusselrolle) oder mit selbstklebendem Papier (bekannt unter dem Namen "Post It").

Die Partikel des Beschichtungsmaterials sind z. B. Lithiumeisenphosphat und andere im Stand der Technik bekannte Aktivmaterialien für Anoden und Kathoden in lithiumhaltigen Batterien sein. Derartige Materialien sind allgemein bekannt für Ihre hohe Härte, so dass diese leicht in weiche Materialien eindringen können bzw. bestens für wie nach vorstehend beschriebenes Verfahren geeignet sind.

Als Verfahren zum Aufbringen der Partikel auf das Basismaterial kommen die oben unter Ziffer 10 genannten Verfahren in Betracht, bevorzugt trockenes Aufsprühen und/oder Pressen oder Kalandrieren der feucht, z. B. mittels Rakeln oder Siebdruck, oder trocken aufgebrachten Beschichtung, erforderlichenfalls unter Druck, z. B. 50...500 bar, bevorzugt 200...400 bar.

Gemäß einer weiteren, besonderen Ausführungsform dieser Erfindung werden elektrochemische Zellen wie Batterien, Brennstoffzellen, Elektrolysezellen, elektrochemische Messzellen nach vorgenanntem Verfahren hergestellt. Die Elektrodenmaterialien von Anode und/oder Kathode sind partikelhaltige Beschichtungsmaterialien. Dabei ist der Stromableiter, enthaltend oder bestehend aus z. B. Platin, Gold, Palladium, Nickel, Blei, Kohlenstoff, einschließlich Kohlenstofffasermaterial, Graphitfolie, Glaskohlenstoff, Aluminium, Zink, Kupfer, Titan, Zirkonium, Vanadium, Tantal, edelmetallbeschichtetes Titan, wobei das Edelmetall z. B. Platin, Rhutenium oder eine Platin-Iridium-Legierung sein kann, das Basismaterial. D. h. es können - je nach Anwendungsfall - auch beliebige Legierungen vorgenannter Metalle mit einem oder mehreren, weiteren Elementen des Periodensystems der Elemente als Stromableiter verwendet werden. Darüber hinaus kann der Stromableiter auch ein beschichtetes Material sein, welches vorgenannte Metalle in seiner Beschichtung enthält und wobei innerhalb der elektrochemischen Zelle die Beschichtung das Elektrodenmaterial berührt. Für elektrochemische Zellen werden besonders bevorzugt Stromableiter bestehend aus einem Metall, z. B. Metallfolie, welche zeitlich vor Herstellung der jeweiligen Zelle und auch während und nach dem Herstellprozess noch nicht gebogen oder gefaltet wurde. Dadurch wird bewirkt, dass lokale elektrische Übergangswiderstände an und infolge von Knicken und Falten der Metallfolie vermieden werden. An derartigen Knicken und Falten kann sich das Materialgefüge verändern, insbesondere aber die Haftung der Partikel auf dem Basismaterial. Es kann z. B. zu lokalen Ablösungen der Partikel vom Basismaterial kommen, wodurch elektrische Übergangswiderstände entstehen können. Bei gewickelten Zellen, bei welchen ein gezieltes Biegen der einzelnen Elektroden und Zellen gewollt ist, wird bevorzugt eine vorsichtige, faltenfreie Biegung bzw. Wickeln realisiert.

Besonders bevorzugt und alternativ werden solche elektrochemischen Zellen erfindungsgemäß wie folgt hergestellt, wobei Separator und Stromableiter vor jeglicher Beschichtung auf deren Endflächenabmessungen zugeschnitten wurden. Der z. B. rechteckige Stromableiter ist erfindungsgemäß so zugeschnitten, dass eine Fahne über die Stromableiterfläche hinausragt, welche für die spätere Stromkontaktierung dient. (Ein späteres Anschweißen dieser Fahne kann somit vorteilhafterweise entfallen):
A) Als Ausgangsmaterial dient der Separator z. B. gemäß dem Stand der Technik, der Anode und Kathode räumlich, elektrisch und mechanisch voneinander trennt und selbst als Elektrolyt oder zur Aufnahme des Elektrolyten dient. Die Dicke des Separators wird so gering wie möglich gewählt, um den Zellwiderstand gering zu halten; dieser sollte jedoch so dick sein, dass er ausreichend mechanisch stabil ist und ein elektrischer Kurzschluss zwischen Anode und Kathode bzw. zwischen deren Stromableitern ausgeschlossen wird. Porosität und Art des Materials des Separators werden so gewählt, dass dieser ausreichend mechanisch stabil ist und gleichzeitig eine für die entsprechende elektrochemische Zelle ausreichende ionische Leitfähigkeit gewährleistet. Beispiele für solche kommerziell erhältliche Separatoren sind das Produkt SEPARION® der Firma Evionic Industries AG gemäß http://nano.evonik.de/sites/nanotechnology/de/technologie/anwendung/separion/pages/default.a spx oder Membranen der kommerziellen Bezeichnung NAFION® der Firma DuPont, welche im Wesentlichen aus sulfoniertem Tetrafluorethylen-Polymer (PTFE) bestehen oder dieses enthalten.
   Gemäß einer möglichen Ausführungsform dieser Erfindung wird dieser Separator beidseitig - analog wie oben beim Stromableiter als Basismaterial beschrieben - jeweils mit dem Anoden- und Kathodenmaterial beschichtet.
   Ein Separator kann erfindungsgemäß auch Alkalicarboxymethylzellulose enthalten, wobei Alkali bevorzugt Lithium, Natrium oder Kalium ist. Erfindungsgemäß enthält der Separator ein gemäß dem Stand der Technik bekanntes anorganisches, nichtbrennbares oder brennhemmendes Material wie Borat, Phosphat, Siliziumdioxid, Aluminiumoxid, Keramik.
   Weiterhin kann der Separator erfindungsgemäß Zellulose enthalten oder daraus bestehen, welche zur Verminderung der Brennbarkeit mit anorganischen Stoffen wie Borat und/oder Phosphat getränkt sein kann. Die im Separator enthaltene Zellulose wird erfindungsgemäß mit Lithiumhydroxid gemäß einem im Stand der Technik bekannten Verfahren ganz oder teilweise zu Lithiumcarboxyzellulose umgesetzt. Zumindest im Fall eines Lithiumcarboxyzellulose enthaltenden Separators kann dieser gleichzeitig als Elektrolyt in einer lithiumhaltigen Sekundärbatterie, bevorzugt Lithiumionenbatterie, fungieren, indem das Lithium in der Carboxyzellulose als Ladungsträger dient.
B) Anschließend werden jeweils beidseitig auf den Separator gemäß A) die Stromableiter, z. B. enthaltend Aluminium und/oder Kupferfolie unter Druck, z. B. 50...500 bar, bevorzugt 200...400 bar aufgepresst oder aufkalandriert. Daraus resultiert eine elektrochemische Zelle, z. B. eine Lithiumionenbatterie.
C) Elektrochemische Zellen gemäß B) können in beliebiger Zahl in Reihe oder parallel elektrisch verknüpft oder gestapelt werden. Ein Reihenschaltung mehrerer elektrochemischer Zellen, indem jeweils die Anode der einen Zelle mit der Kathode der nächsten Zelle assembliert/gestapelt werden - wie im Stand der Technik bekannt - resultiert ein sogenannter "Stack". Die Stromfahnen der Anoden und Kathoden werden jeweils z. B. mechanisch (z. B. Verschrauben, Nieten) oder stoffschlüssig (z. B. durch Verschweißen) miteinander verbunden, so das jeweils eine anodische und ein kathodische Stromzuführung resultieren, welche dann durch das Gehäuse bzw. die Außenfolie (s. D) nach außen geführt werden und die Stromkontaktierung der elektrochemischen Zelle (z. B. Lithiumionenbatterie) nach außen bilden.
D) Der Stack gemäß C) kann in einem für den jeweiligen Zweck ausreichend mechanisch stabilen, elektrisch isoliertem, vorzugsweise nicht oder gering brennbarem Gehäuse oder Folie untergebracht werden. Sofern Folie (z. B. kunststoff- oder keramik-beschichtete Aluminiumfolie) verwendet wird, so wird diese bevorzugt erfindungsgemäß so dick gewählt, dass die Brennbarkeit des Aluminiums im jeweiligen Anwendungsfall ausgeschlossen ist.

Auf diese Weise kann ein erfindungsgemäß besonders bevorzugter Materialverbund in Form einer elektrochemischen Zelle hergestellt werden.

Gemäß einer weiteren Ausführungsform dieser Erfindung können die Stromableiter für Kathode und Anode jeweils separat mit dem Material der Partikelelektrode gemäß der hier beschriebenen Erfindung beschichtet bzw. hergestellt werden und anschließend durch Zusammenfügen mit einem beliebigen Separator wie oben erörtert zu einer elektrochemischen Zelle komplettiert werden. Weitere beliebige Möglichkeiten der Fertigung elektrochemischer Zellen aus den erfindungsgemäß hergestellten anodischen und kathodischen Materialverbünden sind ausführbar. Erfindungsgemäße Materialverbünde können in allen Bereichen der Beschichtungstechnik Anwendung finden. Beispielhaft zu nennen sind mit Kunststoffen bzw. organischen Verbindungen lackierte oder beschichtete Teile mit Basismaterialien aus Metallen, Glas, Holz, Baumaterialien oder weiteren anorganischen oder organischen Werkstoffe oder Biomaterialien. Außerdem können solche Basismaterialien mit anorganischen Überzügen wie Glas sowie mit metallischen Beschichtungen versehen sein. Beispiele für solche Materialverbünde können auch mit anorganischen oder organischen Farbstoffen beschichtete Gläser sein.

### Ausführungsbeispiele

### Beispiel 1

Eine faltenfreie oder zuvor mechanisch geglättete Aluminiumfolie mit einer chemischen Reinheit von 99,9 Masse-% und einer Dicke von 1 mm wird zunächst mit Sandpapier, dessen Sandkörnung durchschnittlich 50 µm entspricht, geschmirgelt.

Bevorzugt und erfindungsgemäß wird die Metallfolie/Aluminiumfolie zu keinem Zeitpunkt zeitlich vor der Beschichtung gefaltet und/oder gebogen sondern immer vollständig eben, glatt und faltenfrei gehalten.

Anstelle des Schmirgelns mit Sandpapier kann jedes andere beliebige Verfahren, z. B. Sandstrahlen, verwendet werden, um derartige Vertiefungen an der Oberfläche der Aluminiumfolie zu erzeugen. Anschließend wird die Aluminiumfolie mittels Ethanol, Aceton oder Isopropanol der Reinheitsqualität "zur Analyse" und ggf. mit Hilfe von Präzisionsreingungszellstoff für elektronischen Bauteile gereinigt, entfettet und getrocknet und mit einer Elektrodenmasse der nachfolgenden Zusammensetzung und Partikelgrößen durch Siebdruck oder Rakeln beschichtet.
Ca. 8 Masse-% Ruß, durchschnittliche Korngröße: 100 nm
Ca. 5 Masse-% Polyvinylidenfluorid
Ca. 88 Masse-% Lithiumtitanat (Li₇Ti₅O₁₂), durchschnittliche Korngröße: 2 µm

Das Polyvinylidenfluorid wurde zuvor durch Rühren in 1-Methyl-2-pyrrolidion in den flüssigen, gelförmigen Zustand überführt. Danach wird die so beschichtete Elektrode z. B. mittels IR-Trockner getrocknet und bei einem Liniendruck von ca. 250 N/mm verdichtet. Die Partikel der Elektrodenmassen fügen sich optimal in die mechanisch mittels Sandpapierschmirgeln erzeugten Vertiefungen auf der Oberfläche des Aluminiums. Die Elektrodenmasse haftet visuell sehr viel besser auf der Aluminiumfolie, d. h. kein Abblättern der Elektrodenmasse von der Aluminiumfolie, im Vergleich zu einer nicht mit Sandpapier vorgeschmirgelten Aluminiumfolie.

Dieselbe Elektrode wird parallel in derselben Weise hergestellt, wobei jedoch die Oberflächenmorphologie des Aluminiums vor Beschichtung nicht verändert wurde. Diese Elektrode zeigt optisch-visuell an verschiedenen Stellen der Oberfläche ein Abblättern der Elektrodenmischung.

Die besondere technische Wirkung des erfindungsgemäßen Materialverbundes kann folgendermaßen nachgewiesen werden:
Die verbesserte Haftung der Partikelelektrode auf dem Stromableiter - hier der Metallfolie - und die daraus resultierende Reduzierung von Übergangswiderständen kann u. a. mittels folgender Methoden begutachtet werden: Laser-Scanning-Mikroskopie, Rasterelektronenmikroskopieevtl. in Kombination mit Vier-Punkt-Leitfähigkeitsmessung und/ oder EDX (energiedispensive Röntgenspektroskopie). Insbesondere durch Anfertigung von Schnitten im senkrechten Winkel zum erfindungsgemäßen, flächenförmigen Materialverbund bzw. zur Elektrodenfläche. Anhand solcher Schnitte kann eingeschätzt werden, dass die Oberfläche des Stromableiters bzw. des Basismaterials gezielt so verändert wurde, dass sich die Partikel der Partikelelektrode bzw. des Beschichtungsmaterials so in die Vertiefungen an der Oberfläche des Stromableiters einfügen. Vermessungen der Berührungsfläche zwischen Partikeln und Vertiefungen in der Oberfläche des Stromableiters bzw. des Basismaterials über einer definierten Fläche von z. B. 100 µm x 100 µm können z. B. mittels Laserscanning-Mikroskopie oder Rasterelektronenmikroskopie erfolgen. In derselben Weise kann der z. B. der Durchmesser von Partikeln oder Vertiefungen ermittelt werden. Die verbesserte Funktion der daraus hergestellten Batterien bzw. elektrochemischer Systeme lässt sich z. B. mittels elektrochemischer Impedanzmessung, mittels Strom- oder Stromdichtemessung in Abhängigkeit von der Zeit bei konstanter Spannung oder durch Spannungsmessung in Abhängigkeit von der Zeit bei konstanter Stromstärke oder Stromdichte verfolgen. Ferner können neue oder gebrauchte Batterien zerlegt werden und die Haftung der Elektrodenschicht auf dem Stromableiter bzw. des Beschichtungsmaterials auf dem Basismaterial mittels üblicher Methoden, z. B. Biegetest, ermittelt werden.

Die so hergestellten Elektroden werden zur Herstellung von Lithiumionenzellen verwendet.

### Beispiel 2

Die Herstellung der Elektrode erfolgt wie in Beispiel 1 beschrieben. Anstelle der Aluminiumfolie wird erfindungsgemäß eine ca. 0,05...5,0 mm; bevorzugt eine 0,5...2,0 mm dicke Folie, enthaltend Graphit, welche mechanisch flexibel sein kann verwendet. Eine solche Graphitfolie, z. B. die Produkte SIGRAFLEX® oder ECOFIT® F der Firma SGL Carbon SE, als Ausgangsmaterial mit ausreichender spezifischer, elektrischer Leitfähigkeit von z. B. 9,0 Ωµm ist kommerziell verfügbar, z. B. gemäß http://www.sqlqroup.com/cms/international/products/productgroups/eg/sigraflex-graphite-foil/index.html?_locale=de http://www.ecophit.com/fileadmin/ecophit/downloads/deutsch/ECOPHIT_F_d.pdf http://www.graphit.de/de/ngs_graphite/technologie_beschreibungen/graphitfolie_ohne_metallein lagen/kenndaten.html

### Beispiel 3

Eine Aluminiumfolie mit einer chemischen Reinheit von 99,9 Masse-% und einer Dicke von 1 mm wird zunächst mit Sandpapier, dessen Sandkörnung durchschnittlich 50 µm entspricht, geschmirgelt, mit Ethanol, der eine Reinheitsqualität für chemisch-analytische Zwecke aufweist, gereinigt und mit Graphit der durchschnittlichen Korngröße 10 µm beschichtet.

### Bezugszeichenliste:

- 1: Stromableiter (z. B. Metallblech oder-folie) bzw. Basismaterials
- 2: Vertiefung in Oberfläche des Stromableiters bzw. des Basismaterials
- 3: Eckiges Partikel
- 4: Elliptisches Partikel
- 5: Partikel allgemein
- 6: Partikel, ausschließlich bestehend aus elektrochemisch aktiven Material
- 7: Zuführeinrichtung für Partikel bzw. Beschichtungsmaterial, z. B. Schüttgutdosiereinrichtung, Schütthöhe-geregelt über die gesamte Breite des Basismaterials, ggf. Partikelzufuhr unter Druck.
- 8: Kalanderwalzen (Verdichtung der Partikel mit Folie).
- 9: Basismaterial - kontinuierlich bewegt in Pfeilrichtung (z. B. auf Förderband liegend und fixiert über Vakuumsaugnäpfe)
- 10: Beschichtung auf Basismaterial
- 11: Partikel mit zahnradförmigen Noppen, Ankern oder Haken
- 12: Partikel mit Klettschlussvertiefungen

## Patentansprüche

1. Materialverbund, umfassend oder bestehend aus einem Partikel aufweisenden Beschichtungsmaterial und einer Metallfolie als Basismaterial, wobei die Metallfolie an ihrer Oberfläche Vertiefungen enthält, welche am Ort der Vertiefungen zu einer verringerten Dicke der Metallfolie führen, wobei die Vertiefungen mittels Oberflächenstrukturierung in die Oberfläche der Metallfolie eingebracht sind, die vor der Oberflächenstrukturierung glatt und eben war und lediglich fertigungsbedingt Unebenheiten zufälliger Natur aufwies, und die Vertiefungen Abweichungen von der glatten, ebenen Oberfläche sind, **dadurch gekennzeichnet, dass** die geometrischen Abmessungen und/oder Formen der Partikel und der Vertiefungen derart angenähert sind oder übereinstimmen, dass ein oder mehrere Partikel in die einzelnen Vertiefungen geometrisch ganz oder teilweise hineinpassen oder durch Kraft- und/oder Energieeinwirkung so fest haftend eingedrungen sind, dass diese Haftung zumindest teilweise auf mechanischen Kräften zwischen Partikeln und Metallfolie beruht und wobei der Durchmesser der am häufigsten vorkommenden Partikel mindestens 5 % kleiner ist als der häufigste Durchmesser der Vertiefungen in der Oberfläche der Metallfolie, und wobei es sich bei den Partikeln des Beschichtungsmaterials um Partikel aus einem für Anoden oder Kathoden in lithiumhaltigen Batterien geeigneten Aktivmaterial handelt.

2. Materialverbund nach Anspruch 1, **dadurch gekennzeichnet, dass** der Durchmesser der am häufigsten vorkommenden Partikel mindestens 10 % oder mindestens 30 % oder mindestens 50 % geringer ist als der häufigste Durchmesser der Vertiefungen in der Oberfläche des Basismaterials.

3. Materialverbund nach Anspruch 1 oder Anspruch 2, **dadurch gekennzeichnet, dass** die geometrischen Formen der Partikel und der Vertiefungen in der Oberfläche der Metallfolie identisch und/oder eckig und/oder kugelförmig und/oder halbkugelförmig und/oder elliptisch und/oder halbelliptisch sind, insbesondere identisch und/oder drei- bis n-eckig sind, wobei n eine beliebige natürliche Zahl sein kann und die mathematischen Abmessungen zwischen den einzelnen Ecken in der Vertiefung der Oberfläche der Metallfolie entweder gleich und/oder verschieden voneinander sein können und/oder durch eine beliebige mathematische Funktion miteinander verknüpft sein können.

4. Materialverbund gemäß einem der vorhergehenden Ansprüche, **dadurch gekennzeichnet, dass** die geometrischen Formen und die mathematischen Abmessungen der Partikel und der Vertiefungen in der Oberfläche der Metallfolie derart angenähert sind, dass jeweils mindestens 99,99 % oder mindestens 80% oder mindestens 50 % oder mindestens 20 % oder mindestens 10 % der Oberfläche der Vertiefungen der Metallfolie von der Oberfläche der Partikeln berührt werden.

5. Materialverbund gemäß einem der vorhergehenden Ansprüche, **dadurch gekennzeichnet, dass** die Partikel und die Vertiefungen in der Oberfläche der Metallfolie eine Klettstruktur bilden, wobei die Klettstruktur **dadurch gekennzeichnet ist, dass** der Innendurchmesser im oberflächennahen Bereich mindestens einer Vertiefung kleiner ist als im oberflächenfernen Bereich derselben Vertiefung.

6. Materialverbund gemäß einem der vorhergehenden Ansprüche, **dadurch gekennzeichnet, dass** die Metallfolie ein elektrisch leitfähiger Stromableiter einer elektrochemischen oder elektrischen Zelle ist.

7. Elektrochemisches System, Batterie, Brennstoffzelle, Elektrolysezelle oder Doppelschichtkondensator, enthaltend einen Materialverbund gemäß einem der vorhergehenden Ansprüche.

8. Verfahren zur Herstellung eines Materialverbundes, der ein Partikel enthaltendes Beschichtungsmaterial und eine Metallfolie als Basismaterial aufweist, beinhaltend zeitlich nacheinander die Schritte:
A) Ermittlung der räumlichen Abmessungen und der Größenverteilung der Partikel, wobei es sich bei den Partikeln des Beschichtungsmaterials um Partikel aus einem für Anoden oder Kathoden in lithiumhaltigen Batterien geeigneten Aktivmaterial handelt,
B) Anpassung und/oder Einstellung der optimalen Partikelgröße und -form gemäß einem der Ansprüche 1 bis 6,
C) Strukturierung der Oberfläche der Metallfolie derart, dass die Partikel der Partikelelektrode in die Vertiefungen der Oberfläche des Basismaterials geometrisch hineinpassen, wobei die Metallfolie vor der Oberflächenstrukturierung eine glatte und ebene Oberfläche und lediglich fertigungsbedingt Unebenheiten zufälliger Natur aufweist und wobei der Durchmesser der am häufigsten vorkommenden Partikel mindestens 5 % kleiner ist als der häufigste Durchmesser der Vertiefungen in der Oberfläche der Metallfolie,
D) Reinigung der Metallfolie mit einem geeignetem Reinigungs- und/oder Lösungsmittel und/oder durch ein physikalisches Verfahren,
E) Trocknung der Metallfolie im Vakuum oder unter Schutzgasatmosphäre oder an der Luft und/oder bei erhöhter Temperatur,
F) Vorbereitung des Beschichtungsmaterials, indem die Komponenten elektrochemisch aktives Material, kohlenstoffhaltiges Material und Binder zu einer homogenen Mischung vermischt werden.
G) Beschichtung der gemäß Schritt c) strukturierten Metallfolie mit dem gemäß Schritt a) und b) angepasstem Beschichtungsmaterial enthaltend Partikeln, wobei die Metallfolie im Vergleich zum Beschichtungsmaterial die gleiche oder eine höhere Temperatur aufweist,
H) Trocknung der beschichteten Metallfolie,
I) Räumliche Verdichtung, bevorzugt mechanisches Pressen oder Kalandrieren der gemäß Schritt G oder H erzeugten Schicht, welche bei einer beliebigen Temperatur, bevorzugt bei 0 bis 200° C, weiter bevorzugt bei Raumtemperatur erfolgen kann.

## Claims

1. Composite comprising or consisting of a coating material comprising particles and of a metal foil as base material, where the surface of the metal foil comprises depressions which, at the site of the depressions, lead to a reduced thickness of the metal foil, where the depressions have been introduced by means of surface structuring into the surface of the metal foil, which before the surface structuring was smooth and even and comprised only unintended uneven areas resulting from a manufacturing process, and the depressions are deviations from the smooth, even surface, **characterized in that** the geometric dimensions and/or shapes of the particles and of the depressions are similar or identical, with the result that one or more particles fit geometrically, entirely or to some extent, into the individual depressions or by virtue of action of force and/or energy have been impressed so as to adhere securely, this adhesion deriving at least to some extent from mechanical forces between particles and metal foil, and where the diameter of the most frequently occurring particles is at least 5% smaller than the most frequent diameter of the depressions in the surface of the metal foil, and where the particles of the coating material are particles made of an active material suitable for anodes or cathodes in lithium-containing batteries.

2. Composite according to Claim 1, **characterized in that** the diameter of the most frequently occurring particles is at least 10% or at least 30% or at least 50% smaller than the most frequent diameter of the depressions in the surface of the base material.

3. Composite according to Claim 1 or Claim 2, **characterized in that** the geometric shapes of the particles and of the depressions in the surface of the metal foil are identical and/or angular and/or spherical and/or hemispherical and/or elliptical and/or semi-elliptical, in particular identical and/or angular with from three to n vertices, where n can be any desired natural number and the mathematical dimensions between the individual vertices in the depression of the surface of the metal foil can be identical and/or different from one another and/or can be linked to one another via any desired mathematical function.

4. Composite according to any of the preceding claims, **characterized in that** the geometric shapes and the mathematical dimensions of the particles and of the depressions in the surface of the metal foil are similar to one another with the result that in each case at least 99.99% or at least 80% or at least 50% or at least 20% or at least 10% of the surface of the depressions of the metal foil is in contact with the surface of the particles.

5. Composite according to any of the preceding claims, **characterized in that** the particles and the depressions in the surface of the metal foil form an interlock structure, where the interlock structure is **characterized in that** the internal diameter in the surface-proximal region of at least one depression is smaller than the surface-distal region of the same depression.

6. Composite according to any of the preceding claims, **characterized in that** the metal foil is an electrically conductive power outlet lead of an electrochemical or electrical cell.

7. Electrochemical system, battery, fuel cell, electrolysis cell or double-layer capacitor, comprising a composite according to any of the preceding claims.

8. Process for the production of a composite which comprises a coating material comprising particles and comprises a metal foil as base material, involving the following steps in chronological succession:
A) determining of the spatial dimensions and the size distribution of the particles, where the particles of the coating material are particles made of an active material suitable for anodes or cathodes in lithium-containing batteries,
B) setting and/or appropriate adjustment of the ideal particle size and particle shape according to any of Claims 1 to 6,
C) structuring of the surface of the metal foil in a manner such that the particles of the particle electrode fit geometrically into the depressions of the surface of the base material, where the surface of the metal foil before the surface-structuring is smooth and even and comprises only unintended uneven areas resulting from a manufacturing process, and where the diameter of the most frequently occurring particles is at least 5% smaller than the most frequent diameter of the depressions in the surface of the metal foil,
D) cleaning of the metal foil with a suitable cleaner and/or solvent and/or by a physical method,
E) drying of the metal foil in a vacuum or in a protective gas atmosphere or in air and/or at elevated temperature,
F) preparation of the coating material by mixing the electrochemically active material, carbon-containing material and binder components to give a homogeneous mixture,
G) coating of the metal foil structured according to step C) with the coating material appropriately adjusted according to step A) and B) comprising particles, where the temperature of the metal foil is the same as or higher than that of the coating material,
H) drying of the coated metal foil,
I) at any desired temperature, preferably at 0 to 200°C, more preferably at room temperature, spatial compaction, preferably mechanical pressing or calendering of the layer produced according to step G) or H) can take place.

## Revendications

1. Matériau composite, comprenant ou constitué par un matériau de revêtement comprenant des particules et un film métallique en tant que matériau de base, le film métallique contenant des creux sur sa surface, qui conduisent à une épaisseur réduite du film métallique à l'emplacement des creux, les creux étant introduits par structuration de surface dans la surface du film métallique, qui était lisse et plate avant la structuration de surface et ne présentait que des inégalités de nature accidentelle liées au processus de fabrication, et les creux étant des déviations de la surface lisse et plate, **caractérisé en ce que** les dimensions et/ou formes géométriques des particules et des creux sont approximées ou concordent de telle sorte qu'une ou plusieurs particules rentrent géométriquement en totalité ou en partie dans les creux individuels ou soient introduites par l'action d'une force et/ou d'une énergie de manière si solidement adhérente que cette adhésion repose au moins en partie sur des forces mécaniques entre les particules et le film métallique, le diamètre des particules le plus souvent présentes étant au moins 5 % inférieur au diamètre des creux le plus souvent présents dans la surface du film métallique, et les particules du matériau de revêtement consistant en des particules d'un matériau actif approprié pour des anodes ou des cathodes dans des batteries contenant du lithium.

2. Matériau composite selon la revendication 1, **caractérisé en ce que** le diamètre des particules le plus souvent présentes est au moins 10 % ou au moins 30 % ou au moins 50 % inférieur au diamètre des creux le plus souvent présents dans la surface du matériau de base.

3. Matériau composite selon la revendication 1 ou la revendication 2, **caractérisé en ce que** les formes géométriques des particules et des creux dans la surface du film métallique sont identiques et/ou angulaires et/ou sphériques et/ou hémisphériques et/ou elliptiques et/ou semi-elliptiques, notamment sont identiques et/ou tri- à n-angulaires, n pouvant être un nombre naturel quelconque, et les dimensions mathématiques entre les angles individuels dans le creux de la surface du film métallique pouvant être identiques et/ou différentes les unes des autres et/ou pouvant être reliées les unes avec les autres par une fonction mathématique quelconque.

4. Matériau composite selon l'une quelconque des revendications précédentes, **caractérisé en ce que** les formes géométriques et les dimensions mathématiques des particules et des creux dans la surface du film métallique sont approximées de telle sorte qu'au moins 99,99 % ou au moins 80 % ou au moins 50 % ou au moins 20 % ou au moins 10 % de la surface des creux du film métallique soit en contact avec la surface des particules.

5. Matériau composite selon l'une quelconque des revendications précédentes, **caractérisé en ce que** les particules et les creux dans la surface du film métallique forment une structure autoagrippante, la structure autoagrippante étant **caractérisée en ce que** le diamètre intérieur dans la zone proche de la surface d'au moins un creux est inférieur à celui dans la zone éloignée de la surface du même creux.

6. Matériau composite selon l'une quelconque des revendications précédentes, **caractérisé en ce que** le film métallique est un collecteur de courant électriquement conducteur d'une cellule électrochimique ou électrique.

7. Système électrochimique, batterie, pile à combustible, cellule d'électrolyse ou condensateur à double couche, contenant un matériau composite selon l'une quelconque des revendications précédentes.

8. Procédé de fabrication d'un matériau composite, qui comprend un matériau de revêtement contenant des particules et un film métallique en tant que matériau de base, comprenant successivement dans le temps les étapes suivantes :
A) la détermination des dimensions spatiales et de la distribution de taille des particules, les particules du matériau de revêtement consistant en des particules d'un matériau actif approprié pour des anodes ou des cathodes dans des batteries contenant du lithium,
B) l'adaptation et/ou l'ajustement de la taille et de la forme optimale des particules selon l'une quelconque des revendications 1 à 6,
C) la structuration de la surface du film métallique de telle sorte que les particules des électrodes particulaires rentrent géométriquement dans les creux de la surface du matériau de base, le film métallique présentant avant la structuration de surface une surface lisse et plate et ne présentant que des inégalités de nature accidentelle liées au processus de fabrication, et le diamètre des particules le plus souvent présentes étant au moins 5 % inférieur au diamètre des creux le plus souvent présents dans la surface du film métallique,
D) le nettoyage du film métallique avec un détergent et/ou solvant approprié et/ou par un procédé physique,
E) le séchage du film métallique sous vide ou dans une atmosphère de gaz protecteur ou dans l'air et/ou à température élevée,
F) la préparation du matériau de revêtement par mélange des composants matériau électrochimiquement actif, matériau carboné et liant en un mélange homogène,
G) le revêtement du film métallique structuré selon l'étape c) avec le matériau de revêtement contenant des particules adapté selon les étapes a) et b), le film métallique présentant la même température ou une température plus élevée en comparaison du matériau de revêtement,
H) le séchage du film métallique revêtu,
I) la compression spatiale, de préférence le pressage mécanique ou le calandrage, de la couche formée selon l'étape G ou H, qui peut avoir lieu à une température quelconque, de préférence de 0 à 200 °C, de manière davantage préférée à la température ambiante.
